# EUROPEAN PATENT APPLICATION

(11) **EP 4 539 443 A1**
(43) Date of publication of application: **16.04.2025**
(21) Application number: 23838890.4
(22) Date of filing: 10.07.2023
(51) Int. Cl.: H04M 1/7243, H04N 21/488

(54) **MESSAGE SHARING METHOD AND RELATED DEVICE**

(30) Priority: 12.07.2022 CN 202210818133
(71) Applicant: Huawei Technologies Co., Ltd., Shenzhen, Guangdong 518129 (CN)
(72) Inventor: ZHANG, Yayun, Shenzhen, Guangdong 518129 (CN); DU, Yiquan, Shenzhen, Guangdong 518129 (CN)
(74) Representative: Maiwald GmbH
(86) International application number: PCT/CN2023/106528
(87) International publication number: WO 2024/012398

(57) **Abstract**

This application discloses a message sharing method and a related device. When a plurality of electronic devices are bound to a same account (for example, a Huawei account), a notification message received by each electronic device may be synchronized to and displayed on other electronic devices, and a user may perform an operation like viewing or deleting the notification message on any one of the electronic devices. This implements sharing and management of the notification message between the plurality of electronic devices, simplifies a user operation, saves time for the user to view the notification message, reduces a risk that the user misses viewing key information, and improves user experience.

## Description

This application claims priority to Chinese Patent Application No. 202210818133.4, filed on July 12, 2022 and entitled "MESSAGE SHARING METHOD AND RELATED DEVICE", which is incorporated herein by reference in its entirety.

### TECHNICAL FIELD

This application relates to the field of terminal technologies, and in particular, to a message sharing method and a related device.

### BACKGROUND

With rapid development of terminal technologies, a same user may have a plurality of terminal devices (for example, a mobile phone and a tablet computer), and an increasing quantity of applications (Application, APP) are installed on the terminal devices. These applications may send a plurality of notification messages (for example, push messages and chat messages) to each terminal device of the user, the user needs to open each terminal device to view the notification messages one by one. This consumes a large amount of time, is complex to operate, and provides poor user experience.

### SUMMARY

Embodiments of this application provide a message sharing method and a related device, so that a plurality of electronic devices can share and manage a notification message. This simplifies a user operation and improves user experience.

According to a first aspect, an embodiment of this application provides a message sharing method, applied to a first electronic device. The method includes:
The first electronic device displays a first virtual icon, where the first virtual icon is a virtual icon corresponding to a first application, the first application is installed on a second electronic device, and both the second electronic device and the first electronic device are associated with a first account; the first electronic device detects a first operation performed by a user on the first virtual icon; and the first electronic device displays a first notification message list in response to the first operation, where the first notification message list includes one or more options, the one or more options include a first option, the first option is an option corresponding to a first notification message, and the first notification message is a notification message that is of the first application and that is received by the second electronic device.

According to the method provided in the first aspect, when a plurality of electronic devices (for example, the first electronic device and the second electronic device) are bound to a same account (for example, a Huawei account), a specific application is installed on one of the electronic devices (for example, the second electronic device), and the application is not installed on other electronic devices (for example, the first electronic device), a notification message of the application that is received by the second electronic device may be synchronized to and displayed on the other electronic devices (for example, the first electronic device), and the user may perform an operation like viewing or deleting the notification message on any one of the electronic devices. This implements sharing and management of the notification message between the plurality of electronic devices, simplifies a user operation, saves time for the user to view the notification message, reduces a risk that the user misses viewing key information, and improves user experience.

In a possible implementation, the first virtual icon is generated based on an icon of the first application, and the first virtual icon indicates that the first application is not installed on the first electronic device.

In this way, the user may learn of the application from which the first notification message comes, and may learn that the application is not installed on the first electronic device.

In a possible implementation, after that the first electronic device displays a first notification message list, the method further includes: The first electronic device detects a second operation performed by the user on the first option; the first electronic device displays first content in the first notification message list in response to the second operation, where the first content is message content of the first notification message; and the first electronic device sends a first indication message to the second electronic device, where the first indication message indicates the second electronic device to update a state of the first notification message to a "read" state.

In this way, after the user views specific content of the notification message on the first electronic device, the first electronic device may indicate the second electronic device to update the state of the notification message to the "read" state, to indicate that the user has viewed the specific content of the notification message.

In a possible implementation, after that the first electronic device displays a first notification message list, the method further includes: The first electronic device detects a third operation performed by the user on the first option; in response to the third operation, the first electronic device cancels display of the first option in the first notification message list; and the first electronic device sends a second indication message to the second electronic device, where the second indication message indicates the second electronic device to update a state of the first notification message to a "deleted" state.

In this way, after the user deletes the notification message on the first electronic device, the first electronic device may indicate the second electronic device to update the state of the notification message to the "deleted" state (that is, cancel display of the notification message that has been deleted by the user), to indicate that the user has deleted the notification message.

In a possible implementation, after that the first electronic device displays a first notification message list, the method further includes: The first electronic device detects a fourth operation performed by the user on the first notification message list; and the first electronic device refreshes and displays the first notification message list in response to the fourth operation, where one or more options included in the first notification message list displayed after the refreshing are completely the same as, partially the same as, or completely different from the one or more options included in the first notification message list displayed before the refreshing.

In this way, after the user refreshes the notification message list on the first electronic device, the first electronic device may refresh and display the notification message list. It is easy to understand that if the first application on another electronic device (for example, an electronic device) does not receive a new notification message, the one or more options included in the notification message list displayed after the refreshing are completely the same as the one or more options included in the first notification message list displayed before the refreshing; or if the first application on another electronic device (for example, an electronic device) receives a new notification message, the one or more options included in the notification message list displayed after the refreshing may be partially the same as or completely different from the one or more options included in the first notification message list displayed before the refreshing.

In a possible implementation, the one or more options further include a second option, and after that the first electronic device displays a first notification message list, the method further includes: The first electronic device detects a fifth operation performed by the user on the first notification message list; and the first electronic device displays the second option in the first notification message list in response to the fifth operation, where the second option is an option corresponding to a second notification message, and the second notification message is a notification message that is of the first application and that is received by the second electronic device.

In this way, in addition to viewing the first notification message in the message notification list, the user may further view more other notification messages (for example, the second notification message).

In a possible implementation, before that the first electronic device displays a first virtual icon, the method further includes: The first electronic device receives first data sent by a first server, where the first data is generated by the second electronic device based on the first notification message and sent to the first server, and the first data is used by the first electronic device to display the first virtual icon and the first notification message list based on the first data.

In this way, the second electronic device may synchronize the first notification message to the first electronic device by using the first server, so that the user can view the notification message across devices.

In a possible implementation, the first electronic device displays the first virtual icon in the following conditions: The second electronic device detects an operation of enabling a message sharing function for the first application by the user; and in response to the operation, the second electronic device allows the first application to share a message with one or more electronic devices, where the one or more electronic devices include the first electronic device.

In this way, after the first application on the second electronic device enables the message sharing function, the second electronic device may share the notification message with another electronic device after receiving the notification message of the first application, so that the user can view the notification message across devices.

In a possible implementation, the first notification message list is displayed on the first electronic device in a form of a feature ability FA widget.

The FA widget has features such as flexibility and easy extension (content elements of a page can be quickly reorganized based on a size of a screen of an electronic device), intuitiveness and strong interaction (content of the page can be effectively organized), and neatness and visual aesthetics (information can be effectively organized into blocks, and a browsing recognition degree can be increased). The notification message list is displayed in the form of the FA widget, so that the user can obtain unified, beautiful, and comfortable interaction experience on different electronic devices.

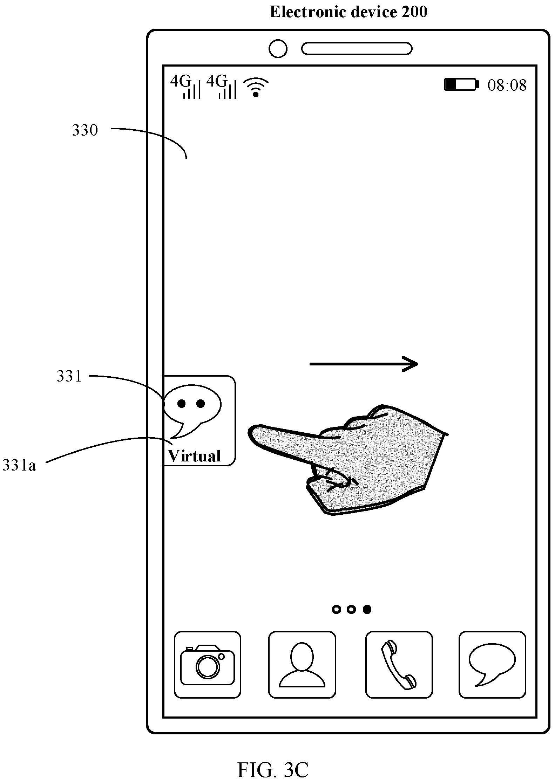

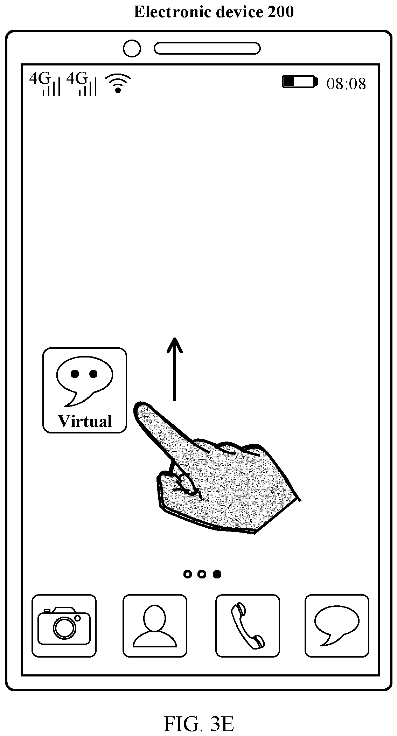

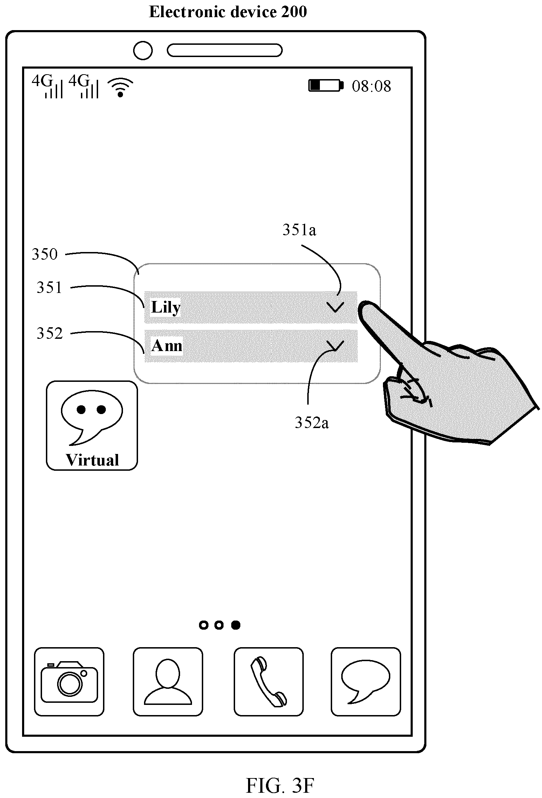

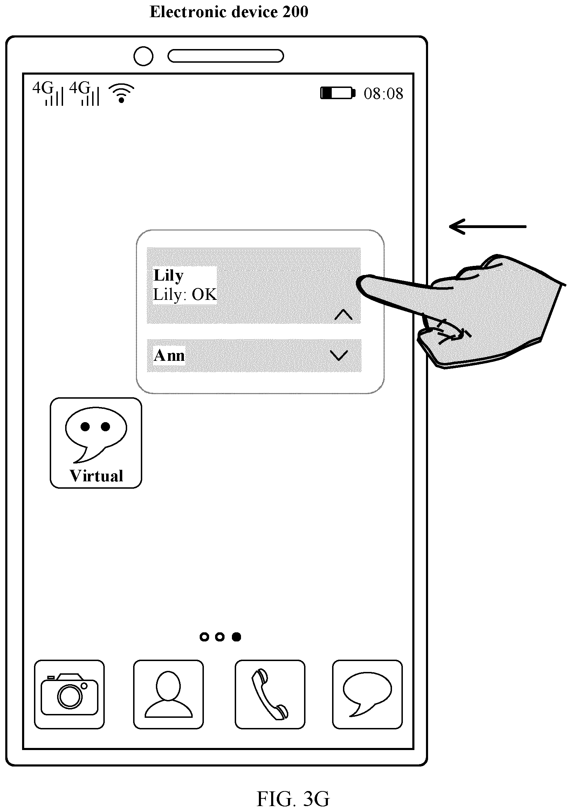

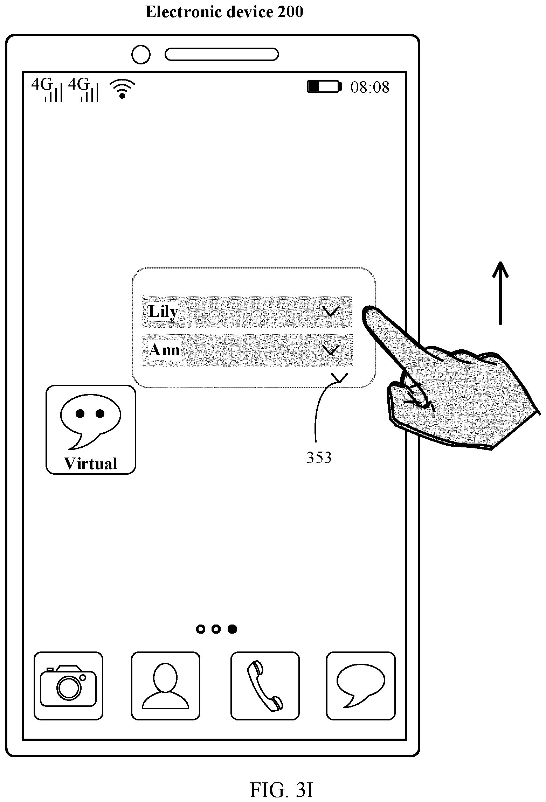

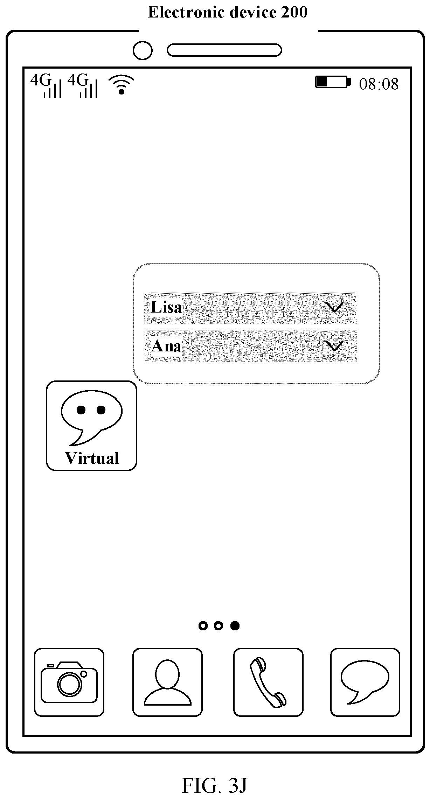

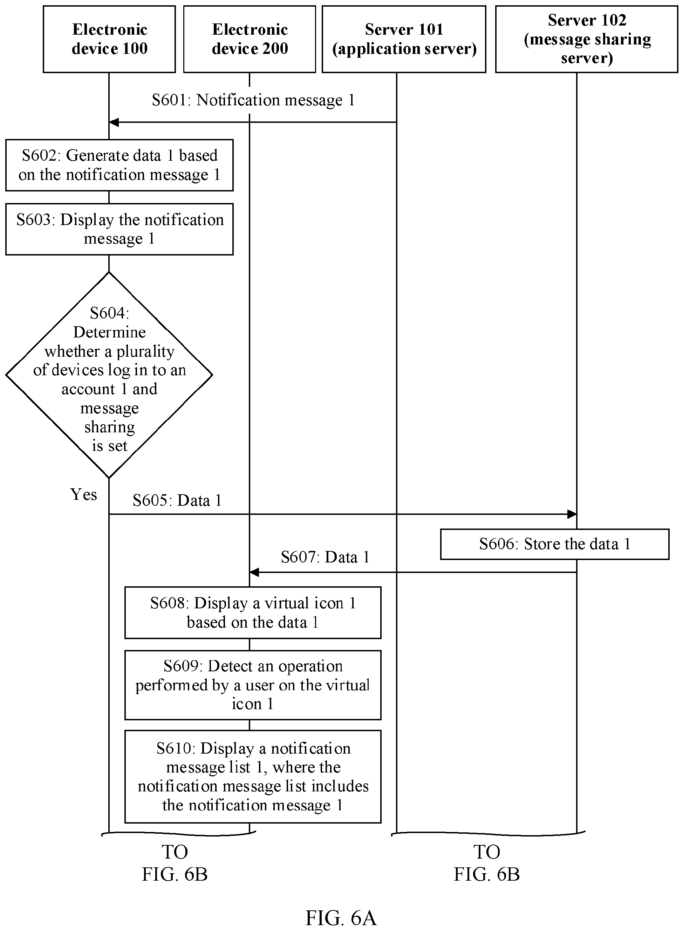

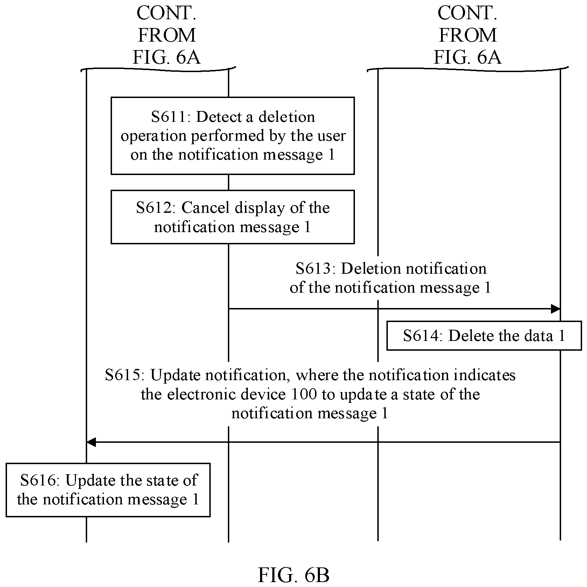

In the first aspect, the first electronic device may be an electronic device 200. The second electronic device may be an electronic device 100. The first application may be an application (for example, a chat application) installed on the second electronic device but not installed on the first electronic device. The first virtual icon may be the virtual icon (for example, a virtual icon shown in FIG. 3C) corresponding to the first application. The first account may be a same account (for example, a Huawei account) to which the first electronic device and the second electronic device log in. The first operation may be an operation (for example, an upward sliding operation) shown in FIG. 3E. The first notification message list may be a notification message list 350 shown in FIG. 3F. The one or more options may be options (for example, an option 351 and an option 352) included in the notification message list shown in FIG. 3F. The first option may be an option (for example, the option 351) included in the notification message list shown in FIG. 3F. The first notification message may be a notification message (for example, a notification message from Lily or Ann in the notification message list shown in FIG. 3F) of the first application received by the second electronic device. The second operation may be an operation (for example, an operation shown in FIG. 3F) of viewing specific content of the first notification message by the user. The first content may be specific content of the first notification message (for example, "OK" shown in FIG. 3G). The first indication message may be an indication message sent when the first electronic device indicates the second electronic device to update the state of the first notification message to the "read" state. The third operation may be an operation (for example, the operation shown in FIG. 3G) of deleting the first notification message by the user. The second indication message may be an indication message sent when the first electronic device indicates the second electronic device to update the state of the first notification message to the "deleted" state. The fourth operation may be an operation of refreshing the first notification message list by the user. The second option may be an option (for example, an option corresponding to a notification message from Lisa) corresponding to a notification message (which may also be referred to as the second notification message) displayed in a notification message list shown in FIG. 3J. The fifth operation may be an operation shown in FIG. 3I. The first data may be data 1 shown in FIG. 6A and FIG. 6B. The first server may be a server 102.

According to a second aspect, an embodiment of this application provides a message sharing method, applied to a first electronic device. The method includes: The first electronic device displays a first user interface, where the first user interface includes icons of one or more applications, the icons of the one or more applications include an icon of a first application, the first application is installed on the first electronic device and a second electronic device, and both the second electronic device and the first electronic device are associated with a first account; the first electronic device detects a first operation performed by a user on the icon of the first application; and the first electronic device displays a first notification message list in response to the first operation, where the first notification message list includes one or more options, the one or more options include a first option, the first option is an option corresponding to a first notification message, and the first notification message is a notification message that is of the first application and that is received by the second electronic device.

According to the method provided in the second aspect, when a plurality of electronic devices (for example, the first electronic device and the second electronic device) are bound to a same account (for example, a Huawei account), and a same application is installed on the plurality of electronic devices, a notification message of the application received by the second electronic device may be synchronized to and displayed on other electronic devices (for example, the first electronic device). The user may perform an operation like viewing or deleting the notification message on any one of the electronic devices. This implements sharing and management of the notification message between the plurality of electronic devices, simplifies a user operation, saves time for the user to view the notification message, reduces a risk that the user misses viewing key information, and improves user experience.

In a possible implementation, after that the first electronic device displays a first notification message list, the method further includes: The first electronic device detects a second operation performed by the user on the first option; the first electronic device displays first content in the first notification message list in response to the second operation, where the first content is message content of the first notification message; and the first electronic device sends a first indication message to the second electronic device, where the first indication message indicates the second electronic device to update a state of the first notification message to a "read" state.

In this way, after the user views specific content of the notification message in the message notification list of the first electronic device, the first electronic device may indicate the second electronic device to update the state of the notification message to the "read" state, to indicate that the user has viewed the specific content of the notification message.

In a possible implementation, after that the first electronic device displays a first notification message list, the method further includes: The first electronic device detects a third operation performed by the user on the first option; in response to the third operation, the first electronic device cancels display of the first option in the first notification message list; and the first electronic device sends a second indication message to the second electronic device, where the second indication message indicates the second electronic device to update a state of the first notification message to a "deleted" state.

In this way, after the user deletes the notification message on the first electronic device, the first electronic device may indicate the second electronic device to update the state of the notification message to the "deleted" state (that is, cancel display of the notification message that has been deleted by the user), to indicate that the user has deleted the notification message.

In a possible implementation, after that the first electronic device displays a first notification message list, the method further includes: The first electronic device detects a fourth operation performed by the user on the first notification message list; and the first electronic device refreshes and displays the first notification message list in response to the fourth operation, where one or more options included in the first notification message list displayed after the refreshing are completely the same as, partially the same as, or completely different from the one or more options included in the first notification message list displayed before the refreshing.

In this way, after the user refreshes the notification message list on the first electronic device, the first electronic device may refresh and display the notification message list. It is easy to understand that if the first application on another electronic device (for example, an electronic device) does not receive a new notification message, the one or more options included in the notification message list displayed after the refreshing are completely the same as the one or more options included in the first notification message list displayed before the refreshing; or if the first application on another electronic device (for example, an electronic device) receives a new notification message, the one or more options included in the notification message list displayed after the refreshing may be partially the same as or completely different from the one or more options included in the first notification message list displayed before the refreshing.

In a possible implementation, the one or more options further include a second option, and after that the first electronic device displays a first notification message list, the method further includes: The first electronic device detects a fifth operation performed by the user on the first notification message list; and the first electronic device displays the second option in the first notification message list in response to the fifth operation, where the second option is an option corresponding to a second notification message, and the second notification message is a notification message that is of the first application and that is received by the second electronic device.

In this way, in addition to viewing the first notification message in the message notification list, the user may further view more other notification messages (for example, the second notification message).

In a possible implementation, after that the first electronic device displays a first notification message list, the method further includes: The first electronic device detects a sixth operation performed by the user on the first option; the first electronic device displays a second user interface in response to the sixth operation, where the second user interface is a user interface of the first application, the second user interface includes second content, and the second content is message content of the first notification message; and the first electronic device sends a third indication message to the second electronic device, where the third indication message indicates the second electronic device to update a state of the first notification message to a "read" state.

In this way, after the user may view specific content of the notification message by entering the first application on the first electronic device, the first electronic device may indicate the second electronic device to update the state of the notification message to the "read" state, to indicate that the user has viewed the specific content of the notification message.

In a possible implementation, the icons of the one or more applications included in the first user interface each are an icon of an application having an unread notification message, and before that the first electronic device displays a first user interface, the method further includes: The first electronic device displays a third user interface, where the third user interface includes the icon of the first application; the first electronic device detects a seventh operation performed by the user on the icon of the first application; and the first electronic device displays the first user interface in response to the seventh operation.

In this case, the first user interface may be a user interface that displays, in a clustering manner, icons of applications that each have an unread notification message, and the third user interface may be a desktop. In this way, the icons of the applications that each have an unread notification message are displayed in the clustering manner, so that the user can quickly learn of the specific applications that each have an unread notification message.

In a possible implementation, before that the first electronic device displays a first user interface, the method further includes: The first electronic device receives first data sent by a first server, where the first data is generated by the second electronic device based on the first notification message and sent to the first server, and the first data is used by the first electronic device to display the first notification message list based on the first data.

In this way, the second electronic device may synchronize the first notification message to the first electronic device by using the first server, so that the user can view the notification message across devices.

In a possible implementation, the first electronic device displays the first user interface in the following conditions: The second electronic device detects an operation of enabling a message sharing function for the first application by the user; and in response to the operation, the second electronic device allows the first application to share a message with one or more electronic devices, where the one or more electronic devices include the first electronic device.

In this way, after the first application on the second electronic device enables the message sharing function, the second electronic device may share the notification message with another electronic device after receiving the notification message of the first application, so that the user can view the notification message across devices.

In a possible implementation, the first notification message list further includes an identifier of the second electronic device, and the identifier of the second electronic device indicates that the first notification message is received by the second electronic device.

In this way, the user can learn of a specific electronic device that receives the first notification message.

In a possible implementation, the first notification message list is displayed on the first electronic device in a form of a feature ability FA widget.

The FA widget has features such as flexibility and easy extension (content elements of a page can be quickly reorganized based on a size of a screen of an electronic device), intuitiveness and strong interaction (content of the page can be effectively organized), and neatness and visual aesthetics (information can be effectively organized into blocks, and a browsing recognition degree can be increased). The notification message list is displayed in the form of the FA widget, so that the user can obtain unified, beautiful, and comfortable interaction experience on different electronic devices.

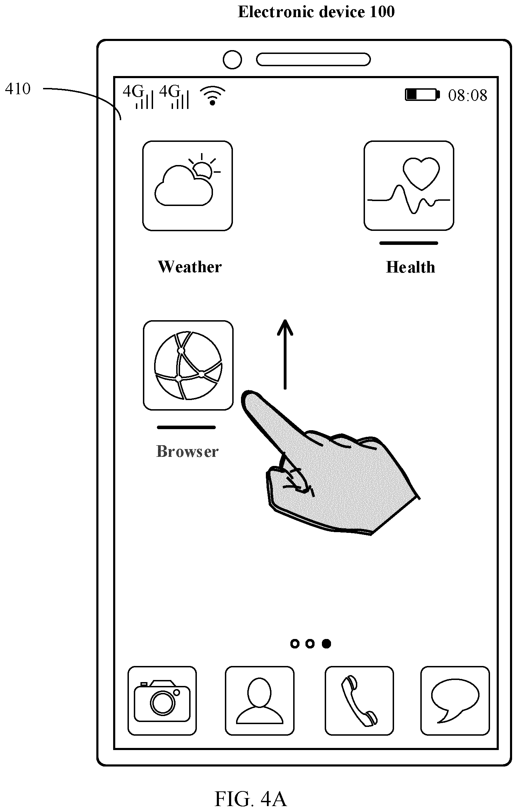

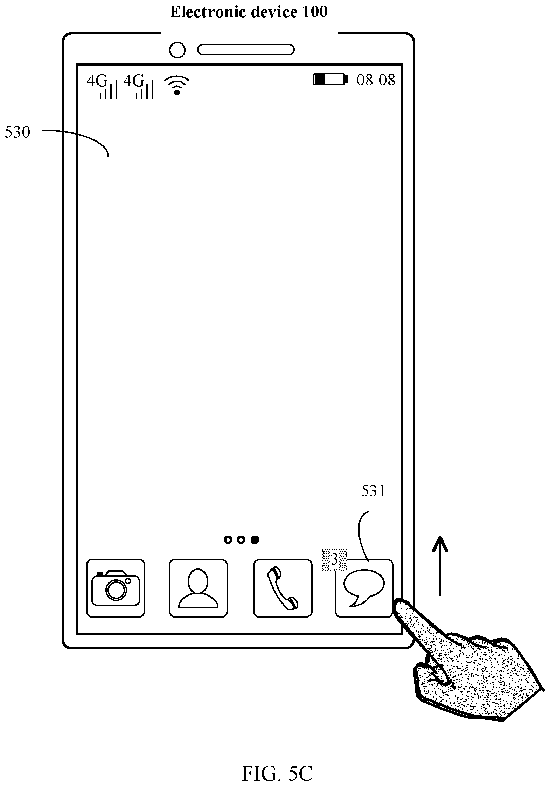

In a possible implementation, a first identifier or a second identifier is displayed on the icons of the one or more applications. The first identifier (for example, a horizontal line below an icon of a browser application shown in FIG. 4A) indicates that the one or more applications each have an unread notification message. The second identifier (for example, a number badge on an icon of an information application shown in FIG. 5C) indicates a quantity of unread notification messages of the one or more applications.

In this way, it is convenient for the user to learn of a specific application that has an unread message and a quantity of unread messages.

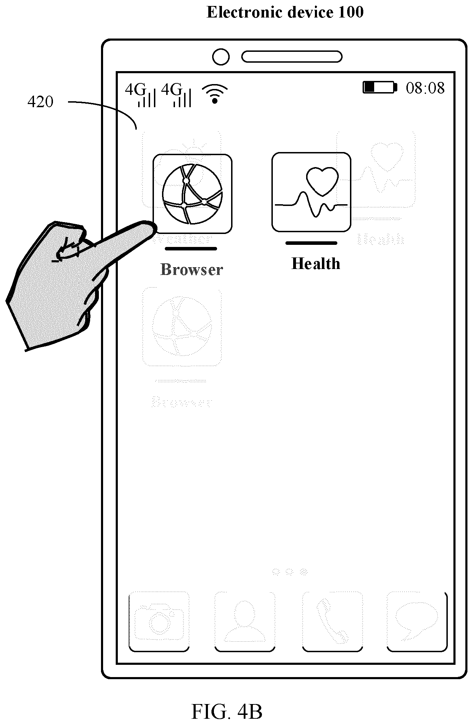

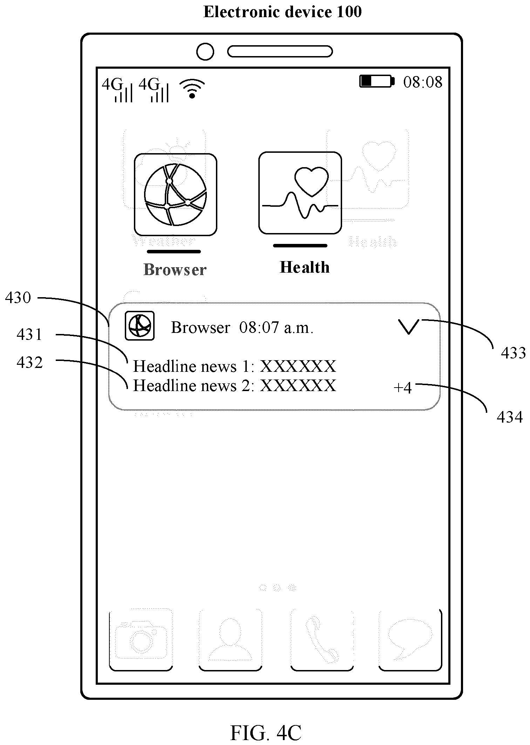

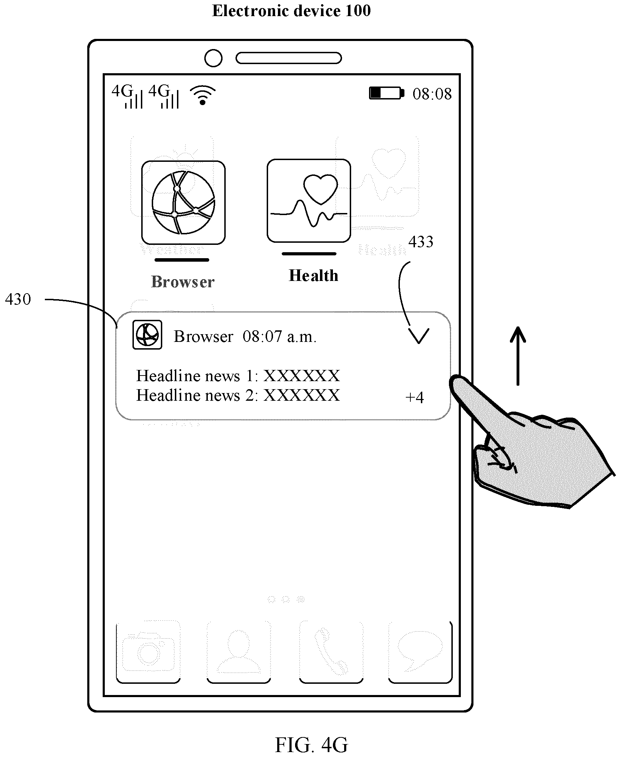

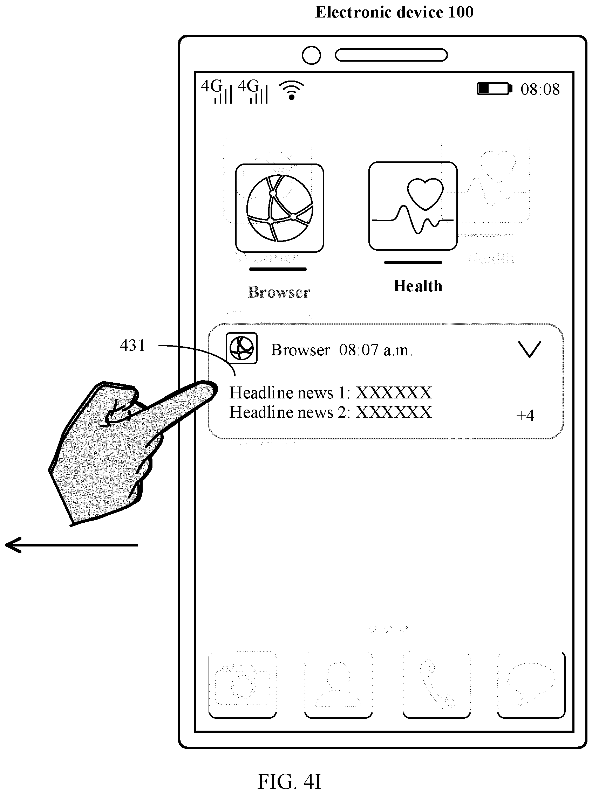

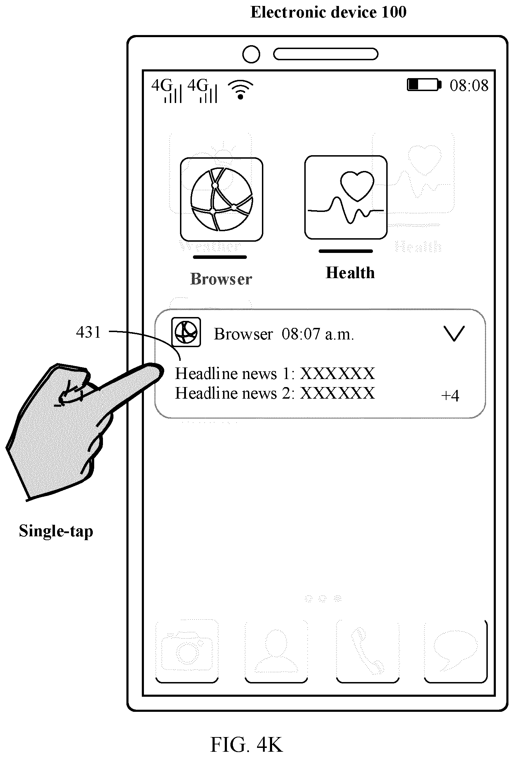

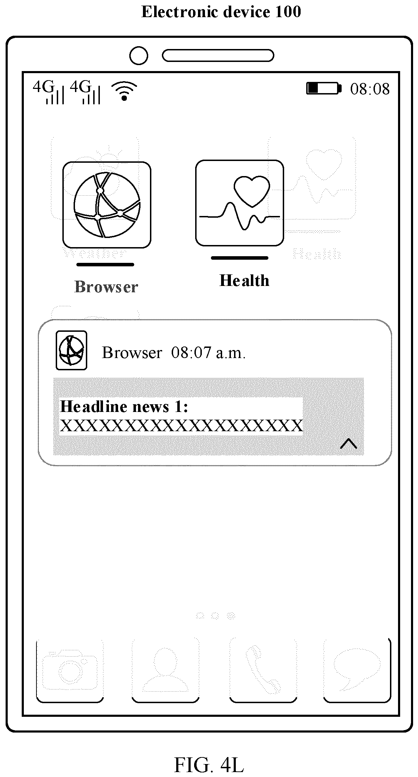

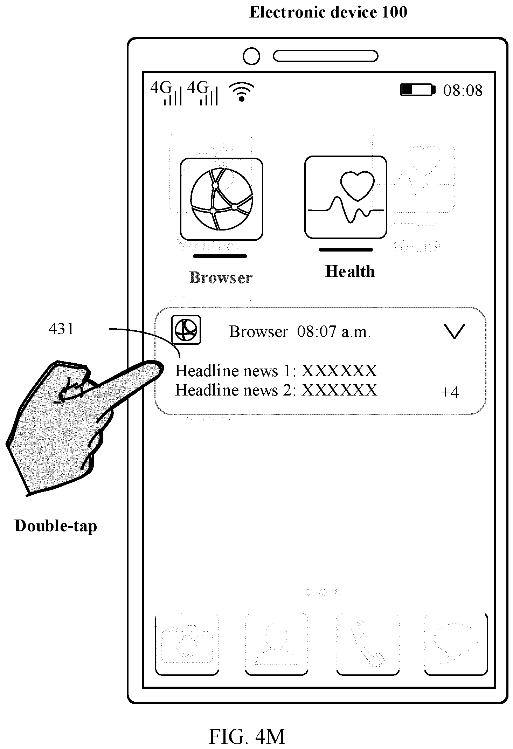

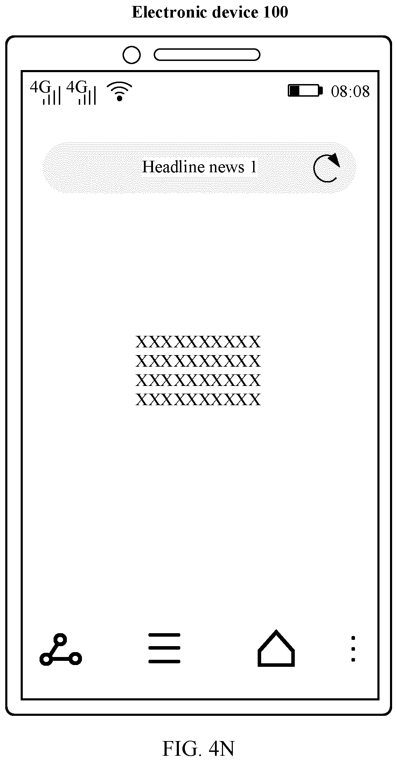

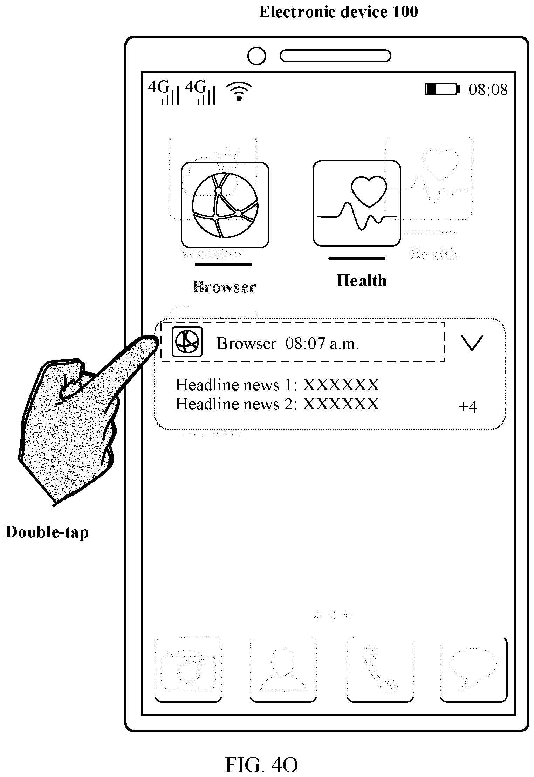

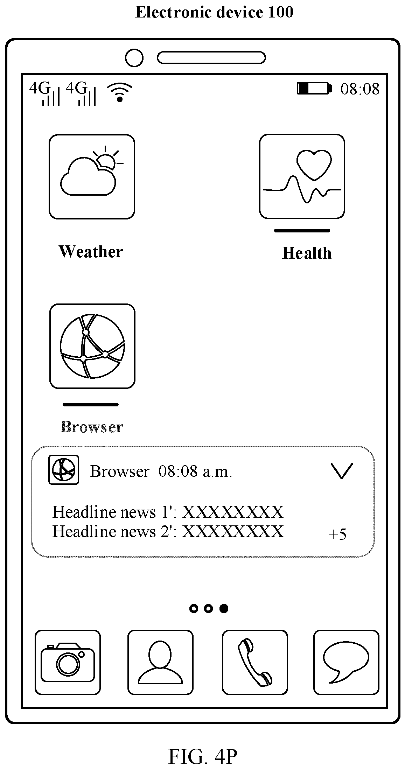

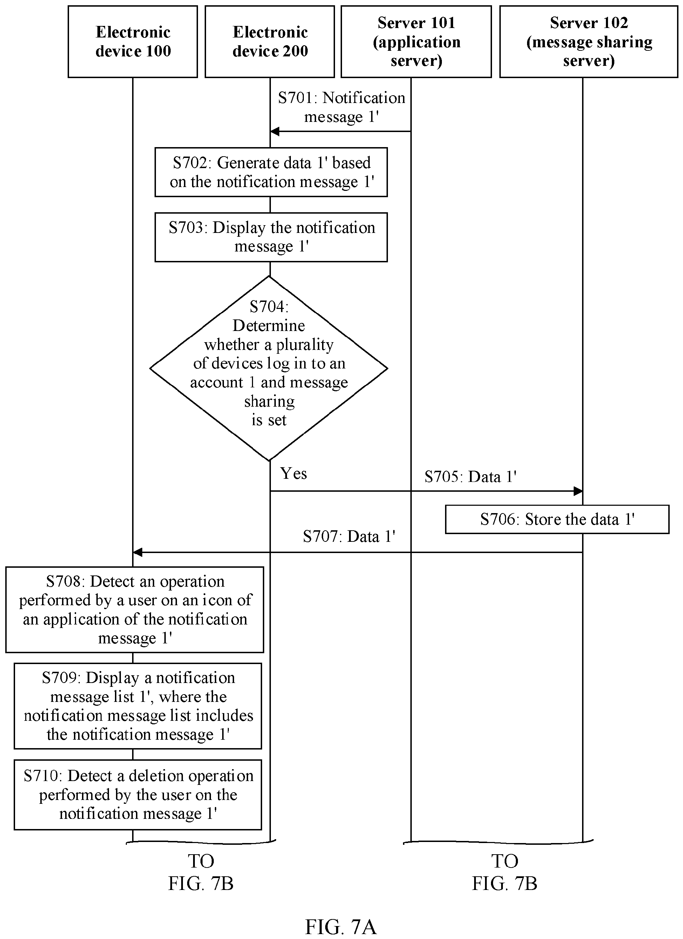

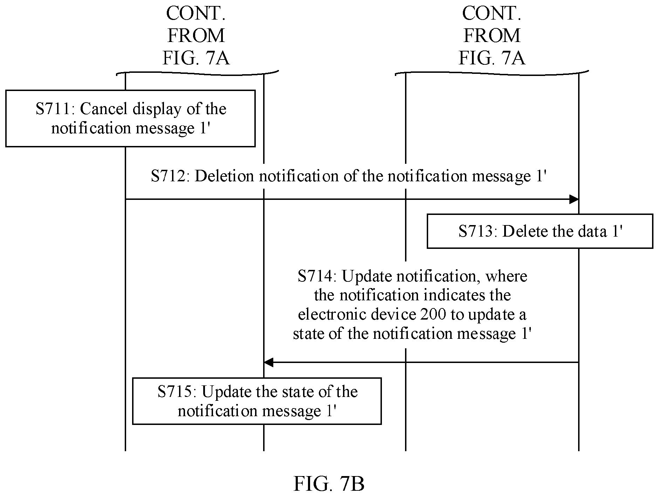

In the second aspect, the first electronic device may be an electronic device 100. The second electronic device may be an electronic device 200. The first application may be an application (for example, a browser application) installed on the second electronic device and the first electronic device. The first user interface may be a desktop or a user interface shown in FIG. 4B. The first account may be a same account (for example, a Huawei account) to which the first electronic device and the second electronic device log in. The first operation may be an operation (for example, a single-tap operation) shown in FIG. 4B. The first notification message list may be a notification message list 430 shown in FIG. 4C. The one or more options may be options (for example, an option 431 and an option 432) included in the notification message list shown in FIG. 4C. The first option may be an option (for example, the option 431) included in the notification message list shown in FIG. 4C. The first notification message may be a notification message (for example, "Headline news 1" or "Headline news 2" in the notification message list shown in FIG. 4C) that is of the first application and that is received by the second electronic device. The second operation may be an operation (for example, an operation shown in FIG. 4K) of viewing specific content of the first notification message by the user. The first content may be the specific content of the first notification message (for example, specific content of the first notification message shown in FIG. 4L). The first indication message may be an indication message sent when the first electronic device indicates the second electronic device to update the state of the first notification message to the "read" state. The third operation may be an operation (for example, an operation shown in FIG. 4I) of deleting the first notification message by the user. The second indication message may be an indication message sent when the first electronic device indicates the second electronic device to update the state of the first notification message to the "deleted" state. The fourth operation may be an operation (for example, an operation shown in FIG. 4O) of refreshing the first notification message list by the user. The second option may be an option (for example, an option corresponding to "Headline news 1") corresponding to a notification message (which may also be referred to as a second notification message) displayed in the notification message list shown in FIG. 4P. The fifth operation may be an operation shown in FIG. 4G. The sixth operation may be an operation shown in FIG. 4M. The second content may be specific content of the notification message shown in FIG. 4N. The third indication message is an indication message sent when the first electronic device indicates the second electronic device to update the state of the first notification message to the "read" state. The third user interface may be a desktop. The seventh operation may be the operation shown in FIG. 4A. The first data may be data 1' shown in FIG. 7A and FIG. 7B. The first server may be a server 102.

According to a third aspect, an embodiment of this application provides an electronic device. The electronic device includes one or more processors and one or more memories. The one or more memories are coupled to the one or more processors. The one or more memories are configured to store computer program code. The computer program code includes computer instructions. When the one or more processors execute the computer instructions, the electronic device is enabled to perform the method according to any possible implementation of the first aspect or the second aspect.

According to a fourth aspect, an embodiment of this application provides a computer storage medium. The computer storage medium stores a computer program, the computer program includes program instructions, and when the program instructions are run on an electronic device, the electronic device is enabled to perform the method according to any possible implementation of the first aspect or the second aspect.

According to a fifth aspect, an embodiment of this application provides a computer program product. When the computer program product runs on a computer, the computer is enabled to perform the method according to any possible implementation of the first aspect or the second aspect.

### BRIEF DESCRIPTION OF DRAWINGS

FIG. 1 is a diagram of a user interface in which an electronic device displays a notification message according to an embodiment of this application;
FIG. 2 is a diagram of a communication system according to an embodiment of this application;
FIG. 3A to FIG. 3N are diagrams of a group of user interfaces involved in implementation of a message sharing method in a scenario 1 (a specific application is installed and logged in to on one electronic device of a user, and the application is not installed or logged in to on another electronic device) according to an embodiment of this application;
FIG. 4A to FIG. 4P are diagrams of a group of user interfaces involved in implementation of a message sharing method in a scenario 2 (one or more same applications are installed on all electronic devices of a user) according to an embodiment of this application;
FIG. 5A to FIG. 5H are diagrams of another group of user interfaces involved in implementation of a message sharing method in a scenario 2 (one or more same applications are installed on all electronic devices of a user) according to an embodiment of this application;
FIG. 6A and FIG. 6B are a schematic flowchart of a message sharing method in a scenario 1 (a specific application is installed and logged in to on one electronic device of a user, and the application is not installed or logged in to on another electronic device) according to an embodiment of this application;
FIG. 7A and FIG. 7B are a schematic flowchart of a message sharing method in a scenario 2 (one or more same applications are installed on all electronic devices of a user) according to an embodiment of this application;
FIG. 8 is a diagram of a possible collaboration manner between internal modules of an electronic device 100 when an FA widget is operated according to an embodiment of this application;
FIG. 9 is a diagram of a software architecture of an electronic device according to an embodiment of this application;
FIG. 10 is a schematic flowchart of a message push method according to an embodiment of this application; and
FIG. 11 is a diagram of a structure of an electronic device according to an embodiment of this application.

### DESCRIPTION OF EMBODIMENTS

The following clearly and completely describes technical solutions in embodiments of this application with reference to accompanying drawings in embodiments of this application. In descriptions of embodiments of this application, unless otherwise specified, "/" indicates "or". For example, A/B may indicate A or B. The term "and/or" in this specification merely describes an association relationship between associated objects, and indicates that three relationships may exist. For example, A and/or B may indicate the following three cases: Only A exists, both A and B exist, and only B exists. In addition, in the descriptions of embodiments of this application, "a plurality of" means two or more.

It should be understood that the terms "first", "second", and the like in this specification, the claims, and the accompanying drawings of this application are intended to distinguish between different objects, but not to describe a specific order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in this application means that a particular feature, structure, or feature described with reference to an embodiment may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in this application may be combined with another embodiment.

A term "user interface (user interface, UI)" in the following embodiments of this application is a medium interface for interaction and information exchange between an application or an operating system and a user, and implements conversion between an internal form of information and a form acceptable to the user. The user interface is source code written in a specific computer language such as Java or an extensible markup language (extensible markup language, XML). Interface source code is parsed and rendered on an electronic device, and is finally presented as content that can be identified by the user. A common representation form of the user interface is a graphical user interface (graphic user interface, GUI), which is a user interface that is displayed in a graphical manner and that is related to a computer operation. The user interface may be a visual interface element, for example, a text, an icon, a button, a menu, a tab, a text box, a dialog box, a status bar, a navigation bar, or a widget that is displayed on a display of the electronic device.

With evolution and innovation of mobile terminal technologies, a same user may have a plurality of terminal devices (for example, a mobile phone and a tablet computer), and more application programs (or referred to as applications, for example, social, news, finance, and entertainment applications) are installed on the terminal devices. These applications may send a plurality of notification messages to each terminal device of the user, for example, periodically push new notification messages to the terminal devices of the user, and the user needs to open each terminal device to view unread notification messages pushed by these applications one by one. This consumes a large amount of time, is complex in operation, and provides poor user experience.

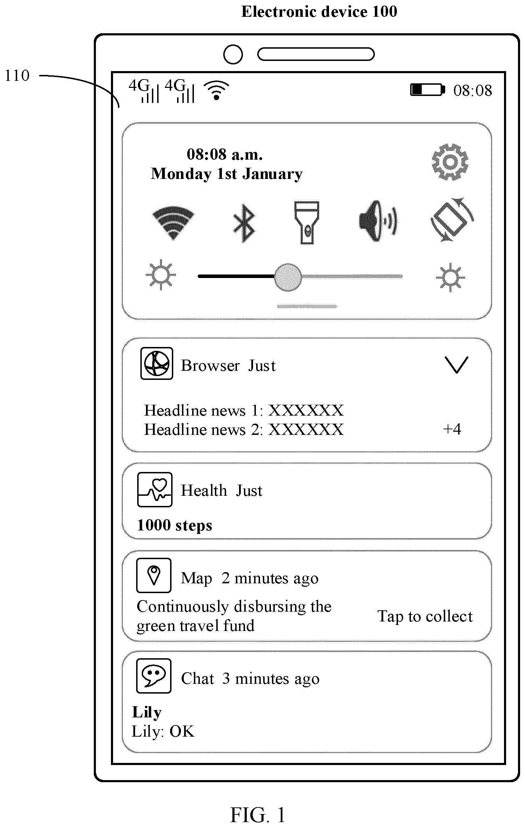

In addition, a notification message sent by each application is usually displayed in a user interface corresponding to a notification bar of the terminal device. Refer to FIG. 1. A user interface 110 shown in FIG. 1 may be a user interface corresponding to a notification bar of an electronic device 100 (which may also be referred to as a terminal device 100). The user interface may include notification messages sent by one or more applications (for example, a "Browser" application, a "Health" application, a "Map" application, and a "Chat" application). It can be learned from FIG. 1 that there are many notification messages that are scattered, unclassified, and disordered. It is difficult for the user to quickly find a notification message of a specific application, and operations are complex. The user may not be patient to view the notification messages one by one, or may quickly delete all the notification messages. As a result, the user may miss viewing key information.

In addition, some applications (for example, some chat applications and some payment applications) may support login on only one terminal device at a time. If an application is logged in to on one terminal device (for example, a mobile phone) of the user, but the application is not installed or logged in to on a terminal device (for example, a mobile phone) currently held by the user, the user may miss an important notification message of the application. This brings great inconvenience to the user.

To resolve a problem that the notification message is displayed in disorder, currently, two solutions are usually used: In a blocklist/trustlist manner, the user may add a concerned application to a trustlist, and add an annoying word to a blocklist. In this way, after receiving a new notification message, if the notification message is sent by the application in the trustlist, the electronic device displays the notification message. If the notification message includes the annoying word in the blacklist, the notification message is filtered out, that is, the notification message is not displayed. In another manner, a priority of a notification message is preset. The user may preset a priority of a notification message of each application, and the electronic device may arrange received notification messages based on the user-preset priority of the notification message of each application, where a notification message with a high priority is arranged before a notification message with a low priority, to facilitate viewing by the user.

It can be learned that the foregoing two solutions are merely for filtering or arranging notification messages on a single electronic device, and do not relate to resolving a problem of displaying and sharing notification messages on a plurality of electronic devices.

Embodiments of this application provides a message sharing method and a related device. When a plurality of electronic devices are bound to a same account (for example, a Huawei account), a notification message received by each electronic device may be synchronized to and displayed on other electronic devices, and a user may perform an operation like viewing or deleting the notification message on any one of the electronic devices. This implements sharing and management of the notification message between the plurality of electronic devices, simplifies a user operation, saves time for the user to view the notification message, reduces a risk that the user misses viewing key information, and improves user experience.

The message sharing method according to embodiments of this application is mainly applied to the following two scenarios.

Scenario 1 (a specific application is installed and logged in to on one electronic device of the user, and the application is not installed or logged in to on another electronic device):
In this scenario, the user has two or more electronic devices. It is assumed that the two or more electronic devices are all mobile phones, and log in to a same account (for example, a same Huawei account). The user installs and logs in to an application on only one of the electronic devices (for example, the electronic device 100). According to the message sharing method provided in embodiments of this application, when the electronic device 100 receives a notification message of the application, a virtual icon corresponding to the application may be displayed on another electronic device, and the user may view and manage (for example, delete), by operating the virtual icon, the notification message of the application that is received by the electronic device 100.

Scenario 2 (one or more same applications are installed on all electronic devices of the user):
In this scenario, one or more same applications are installed on all electronic devices owned by the user, and a same account (for example, a same Huawei account) is logged in to on all the electronic devices. According to the message sharing method provided in embodiments of this application, when the one or more electronic devices of the user receive notification messages of the one or more applications, any electronic device may display icons corresponding to the one or more applications in a clustering manner, and the user may view and manage (for example, delete) the notification messages of all the electronic devices by operating the icons corresponding to the one or more applications on any electronic device.

Specific implementation processes of the message sharing method in the foregoing two scenarios are described in detail in subsequent embodiments. Details are not described herein.

The following first describes a communication system according to an embodiment of this application.

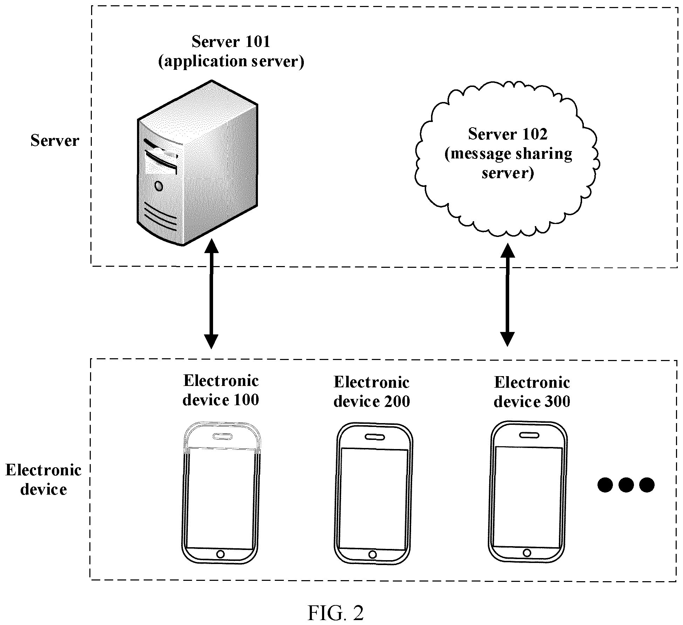

FIG. 2 shows an example of a communication system according to an embodiment of this application.

As shown in FIG. 2, the communication system may include a plurality of servers and a plurality of electronic devices (which may also be referred to as terminal devices).

The plurality of servers may include a server 101 (an application server) and a server 102 (a message sharing server).

The server 101 is a server of an application, and may be configured to send a notification message (for example, a chat message, an SMS message, or a push message of an advertisement or news) of the application to one or more electronic devices.

It may be understood that each application corresponds to an independent server. In this embodiment of this application, only one application is used as an example. If there are a plurality of applications, there are a plurality of corresponding servers 101. When a plurality of applications are installed on the electronic device, the electronic device may receive notification messages sent by servers of the plurality of applications.

The server 102 is a server (for example, a Huawei cloud server) that shares a notification message, and may be configured to receive, store, and process notification messages sent by one or more electronic devices, may be further configured to send a received notification message of another electronic device to the one or more electronic devices, and the like.

In this embodiment of this application, the server 101 and the server 102 may be conventional servers, or may be cloud servers. This is not limited herein.

The plurality of electronic devices may include an electronic device 100, an electronic device 200, and an electronic device 300.

A quantity of electronic devices is not limited in this embodiment of this application, for example, two, three, or four.

The plurality of electronic devices included in the communication system are all intelligent terminal devices, and may be of various types. A specific type of the plurality of electronic devices is not limited in this embodiment of this application. For example, the plurality of electronic devices may include a mobile phone, and may further include a tablet computer, a desktop computer, a laptop computer, a handheld computer, a notebook computer, a smart screen, a wearable device, an augmented reality (Augmented Reality, AR) device, a virtual reality (Virtual Reality, VR) device, an artificial intelligence (Artificial Intelligence, AI) device, a head unit, or the like.

The plurality of electronic devices in the communication system need to log in to a same account. For example, the plurality of electronic devices may log in to a same Huawei account. The account can be a mobile number, an email address, a user-defined user name, or the like.

In addition, the plurality of electronic devices in the communication system may be connected and communicate with each other in any one of the following manners: a wired connection, or a wireless connection, for example, a Bluetooth (Bluetooth, BT) connection, a wireless local area network (wireless local area network, WLAN) connection like a wireless fidelity point-to-point (wireless fidelity point to point, Wi-Fi P2P) connection, a near field communication (near field communication, NFC) connection, or an infrared (infrared, IR) technology connection. This is not limited in this embodiment of this application.

The plurality of electronic devices in the communication system may be configured with different software operating systems (Operating System, OS), including but not limited to HarmonyOS^{®}, Android^{®}, iOS^{®}, Windows^{®}, Linux^{®}, and the like. HarmonyOS^{®} is HarmonyOS of Huawei. The plurality of electronic devices may be all configured with a same software operating system, for example, HarmonyOS^{®}.

The following first describes in detail a series of user interfaces involved in implementation of the message sharing method in different scenarios according to embodiments of this application.

Scenario 1 (a specific application is installed and logged in to on one electronic device of the user, and the application is not installed or logged in to on another electronic device):

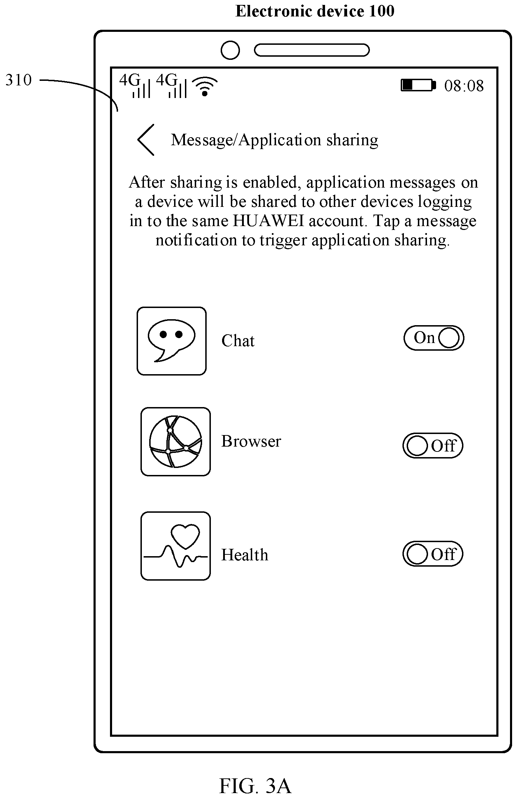

FIG. 3A to FIG. 3N show examples of a series of user interfaces involved in implementation of the message sharing method in the foregoing scenario 1 according to embodiments of this application.

It is assumed that the electronic devices owned by the user are the electronic device 100 and the electronic device 200. For example, both the electronic device 100 and the electronic device 200 are mobile phones, and the two electronic devices have logged in to a same account (for example, a same Huawei account).

First, the user needs to enable a message sharing function on the electronic devices. After the function is enabled, message sharing can be implemented between different electronic devices.

Refer to FIG. 3A. A user interface 310 may be a user interface in which the user enables a message sharing function on the electronic device 100. The user interface 310 may be provided by a "Settings" application. The user interface 310 may include icons of one or more applications (for example, a "Chat" application, a "Browser" application, and a "Health" application) that are installed and logged in to (or not logged in to) on the electronic device 100, and message sharing function switch options corresponding to the icons of the one or more applications. The user may enable/disable the message sharing function of the application by tapping the message function switch option.

The "Chat" application is used as an example. The user may tap a message sharing function switch option corresponding to an icon of the "Chat" application to enable a message sharing function of the "Chat" application. Refer to FIG. 3A. The message sharing function switch option corresponding to the icon of the "Chat" application is in an "On" state, indicating that the user enables the message sharing function of the "Chat" application. In this way, when the electronic device 100 receives a notification message of the "Chat" application, another electronic device (for example, the electronic device 200) that logs in to a same account as the electronic device 100 may also display the notification message of the "Chat" application.

In this embodiment of this application, after the user enables a message sharing function of an application on the electronic device 100, the electronic device may record that the application enables the message sharing function, and the electronic device 100 may indicate a message sharing server to establish a database for storing a notification message of the application. In addition, the electronic device 100 may also enable a listening service for the notification message of the application (the listening service can be run after the electronic device 100 is powered on), and after receiving the notification message of the application, the electronic device 100 may upload related data of the notification message to the message sharing server. In this way, the message sharing server forwards the related data of the notification message to the another electronic device that logs in to the same account as the electronic device 100, so that the another electronic device that logs in to the same account as the electronic device 100 can display the notification message of the application.

The foregoing describes only a process of enabling the message sharing function by using the electronic device 100 as an example. A process of enabling the message function by the another electronic device (for example, the electronic device 200) is similar to this process. Details are not described herein again.

The "Chat" application is used as an example. After the user enables the message sharing function of the "Chat" application on the electronic device 100, the electronic device 100 may receive one or more notification messages of the "Chat" application.

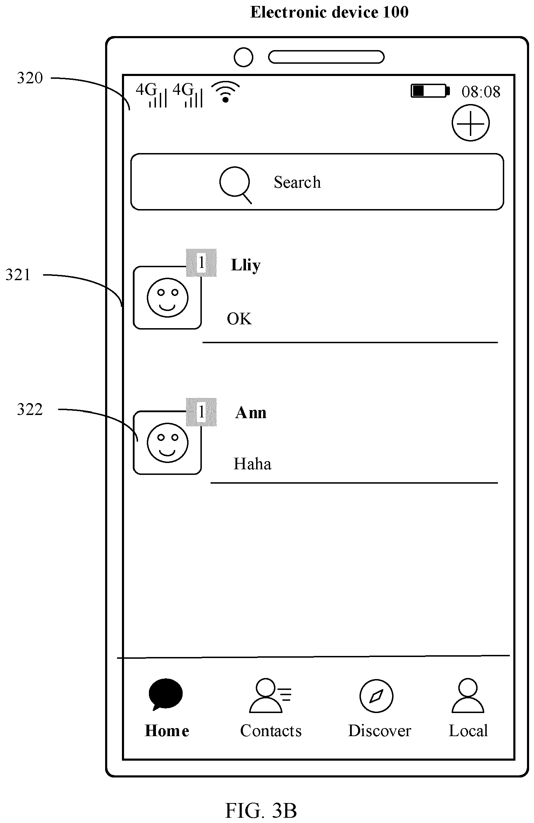

Refer to FIG. 3B. A user interface 320 may be a user interface of the "Chat" application. The user interface may include one or more notification messages (for example, a notification message 321 and a notification message 322). The notification message 321 (for example, "OK") may be from a friend Lily, and the notification message 322 (for example, "Haha") may be from a friend Ann.

It may be understood that the notification message is merely a "chat message" as an example, and is not limited thereto. The notification message may alternatively be another type of message, for example, a push message (for example, a push message of an advertisement type or a news type). This is not limited in this embodiment of this application.

In this embodiment of this application, states of the notification message may be classified into two types: an "unread" state and a "read" state. The two states may be distinguished through some identifiers (for example, a number badge). For example, the two states may be distinguished by determining whether the two states are marked with the number badge. The "unread" state may be marked with the number badge, and the "read" state may not be marked with the number badge. It can be learned that a number badge (for example, a badge of a number 1) is displayed on friend avatars corresponding to the two notification messages. Therefore, the two notification messages are both notification messages in the "unread" state.

The following first describes, with reference to FIG. 3C to FIG. 3F, a process in which the user triggers the electronic device 200 to display a notification message list of an application.

FIG. 3C and FIG. 3F show examples of user interfaces in which the user triggers the electronic device 200 to display the notification message list of the application.

After the electronic device 100 receives one or more notification messages of the "Chat" application, a virtual icon of the "Chat" application may be displayed on another electronic device that logs in to a same account as the electronic device 100.

For example, the another electronic device that logs in to the same account as the electronic device 100 is the electronic device 200. Refer to FIG. 3C. After the electronic device 100 receives the one or more notification messages of the "Chat" application, the electronic device 200 may display a virtual icon 331 in a user interface 330 shown as an example in FIG. 3C, and the virtual icon 331 may be a virtual icon corresponding to the "Chat" application.

The user interface 330 may be a user interface of a "Desktop" application, or may be a user interface of another application. This is not limited in this embodiment of this application.

The virtual icon 331 may be displayed in any area in the user interface 330 in a floating manner.

In some embodiments, to reduce blocking of displayed content in the user interface, the virtual icon 331 may be first partially or completely displayed in an edge area (for example, a left edge area, a right edge area, an upper edge area, or a lower edge area) of the electronic device 200. It can be learned from FIG. 3C that the virtual icon 331 is partially displayed in the left edge area of the electronic device 200.

In some embodiments, to help the user distinguish between the virtual icon of the application and an icon of the application after the application is installed, related identification information may be added and displayed on the virtual icon, to indicate that the icon is the virtual icon. For example, a display identifier 331a (for example, a text identifier "Virtual") may be added to the virtual icon 331. This is not limited thereto. Displaying may alternatively be distinguished in another manner. This is not limited in this embodiment of this application.

It should be noted that, in this embodiment of this application, a virtual icon corresponding to an application may be displayed when the application is not installed/logged in to on the electronic device, to prompt the user that the application is not installed/logged in to on the electronic device. However, when another electronic device associated with the electronic device receives a notification message of the application, the virtual icon may be generated based on an icon of the installed application, and may be similar to the icon of the installed application. However, a related parameter (for example, a parameter like a size) of the icon of the installed application may be changed, or a related identifier (for example, a "Virtual" text identifier) may be added to the icon of the installed application to distinguish from the icon of the installed application. A display style of the virtual icon is not limited in this embodiment of this application, provided that the virtual icon can be distinguished from the icon of the installed application. In this way, the user can distinguish the virtual icon from the icon of the installed application.

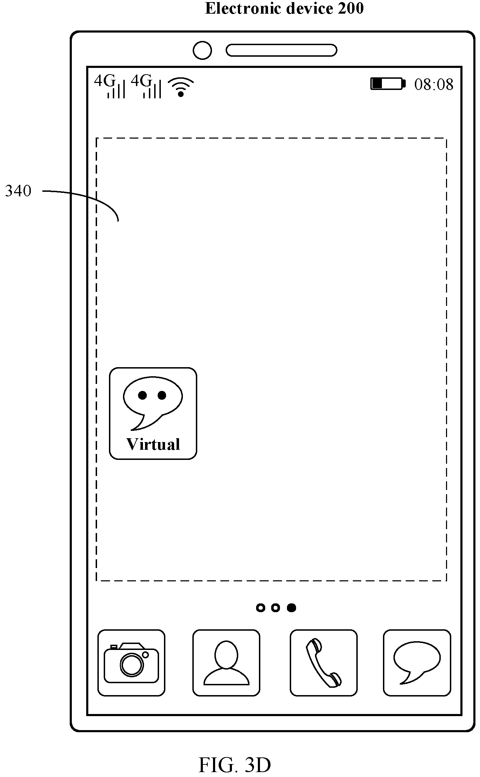

Refer to FIG. 3D. The electronic device 200 may detect an operation of moving the virtual icon 331 to an area 340 by the user (for example, an operation of dragging the virtual icon 331 rightward by the user shown in FIG. 3C), and in response to the operation, the electronic device 200 may display the virtual icon 331 in the area 340.

The area 340 may be a central area of the electronic device 200, and both the central area and the edge area may be preset by a system or the user. This is not limited in this embodiment of this application.

Further, refer to FIG. 3E. After the user moves the virtual icon 331 to the area 340, if the user wants to view a notification message of the virtual icon 331, the electronic device 200 may detect an operation (for example, an upward sliding operation shown in FIG. 3E) performed by the user on the virtual icon 331, and in response to the operation, the electronic device 200 may display a notification message list 350 shown as an example in FIG. 3F.

It should be noted that the operation performed by the user on the virtual icon 331 is merely an upward sliding operation as an example, and may alternatively be another operation. This is not limited in this embodiment of this application.

Refer to FIG. 3F. The notification message list 350 may include options (for example, an option 351 and an option 352) corresponding to one or more notification messages of the "Chat" application that are received by the electronic device 100. It can be learned that the option 351 is an option corresponding to the notification message 321 (that is, the notification message from the friend Lily) in FIG. 3B, and the option 352 is an option corresponding to the notification message 322 (that is, the notification message from the friend Ann) in FIG. 3B. A sender (for example, Lily) of the notification message 321 and a sub-option 351a may be displayed on the option 351. A sender (for example, Ann) of the notification message 322 and a sub-option 352a may be displayed on the option 352.

The notification message list 350 may be displayed in a form of a widget, or may be displayed in another form (for example, a pop-up window form). This is not limited in this embodiment of this application.

In this embodiment of this application, the notification message list 350 may be displayed in the form of a feature ability (Feature Ability, FA) widget as an example.

The user may tap any area of the option (for example, the option 351 or the option 352) corresponding to the notification message to view specific content of the notification message, or may tap the sub-option (for example, the sub-option 351a or the sub-option 352a) to view specific content of the notification message.

In some embodiments, the user does not need to: move the virtual icon 331 to the area 340 shown in FIG. 3D and then perform an operation on the virtual icon 331 to trigger display of the notification message list, but may directly perform the operation (for example, the upward sliding operation) on the virtual icon 331 to trigger display of the notification message list. For example, when the virtual icon 331 shown in FIG. 3C is displayed in the edge area, the user directly performs an operation (for example, the upward sliding operation) on the virtual icon 331, to trigger display of the notification message list.

In this embodiment of this application, the option corresponding to the notification message may be used to display information, for example, specific content of the notification message and a sender of the notification message.

With reference to FIG. 3F to FIG. 3K, the following describes a process in which the user views the notification message and deletes the notification message from the notification message list.

Still refer to FIG. 3F. If the user wants to view specific content of a notification message, the user may perform an operation on an option corresponding to the notification message to view the specific content of the notification message. For example, if the user wants to view the specific content of the notification message corresponding to the option 351, the electronic device 200 may detect an operation performed by the user on the option 351 (for example, an operation of tapping the sub-option 351a displayed on the option 351), and in response to the operation, the electronic device 200 may display the specific content (for example, "OK") of the notification message corresponding to the option 351 shown as an example in FIG. 3G. Similarly, the user may also view another notification message (for example, the notification message corresponding to the option 352) in the foregoing manner. Details are not described herein again.

In some embodiments, a part or all of specific content of the notification message may alternatively be directly displayed on the option corresponding to the notification message.

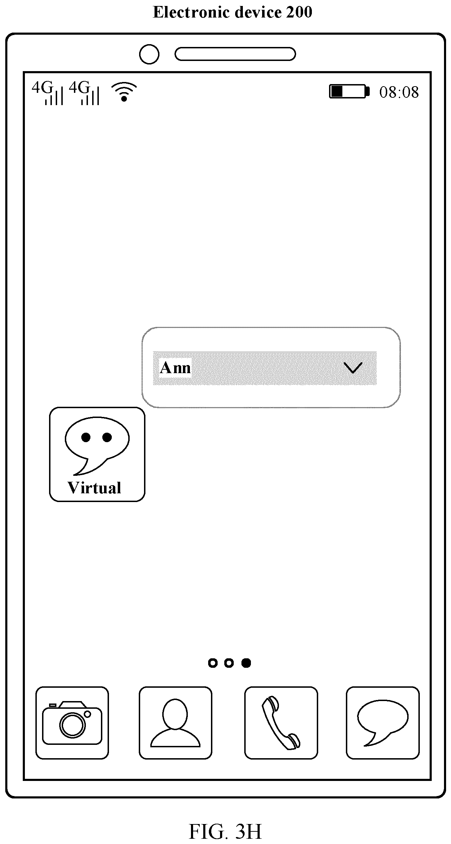

Refer to FIG. 3G. If the user wants to delete a notification message (that is, remove the notification message from the notification message list), the user may also perform an operation on an option corresponding to the notification message to delete the notification message. For example, if the user wants to delete the notification message corresponding to the option 351, the electronic device 200 may detect an operation (for example, a rightward sliding operation) performed by the user on the option 351, and in response to the operation, the electronic device 200 may display a notification message list shown as an example in FIG. 3H.

Refer to FIG. 3H. It can be learned that the notification message list no longer displays the notification message corresponding to the option 351, but displays only the option 352. In other words, the electronic device 200 removes the notification message corresponding to the option 351 from the notification message list. Similarly, the user may also delete another notification message (for example, the notification message corresponding to the option 352) in the foregoing manner. Details are not described herein again.

In some embodiments, the user may alternatively perform an operation (for example, a leftward sliding operation or a rightward sliding operation) on the option 351 or the option 352 shown in FIG. 3F when the specific content of the notification message is not displayed on the option 351 or the option 352, to delete the notification message.

It may be understood that, after the user deletes/views all the notification messages, the electronic device 200 may no longer display the notification message list, or may display a blank notification message list. In some embodiments, after the user deletes/views all the notification messages, the electronic device 200 may no longer display the virtual icon, or the user may manually delete the virtual icon.

It should be noted that the operation performed by the user on the option 351 is merely the rightward sliding operation as an example, or may be another operation (for example, the leftward sliding operation). This is not limited in this embodiment of this application.

**In** some embodiments, the electronic device 200 may further support the user in viewing more notification messages by performing an upward/downward sliding operation on the message notification list. This is convenient. For example, if there are a large quantity of notification messages in the message notification list, the electronic device 200 may first display some notification messages (for example, the notification messages from Lily and Ann shown as an example in FIG. 3I). Further, the electronic device 200 may detect an operation (for example, an upward sliding operation) performed by the user on the message notification list shown as an example in FIG. 3I, and in response to the operation, the electronic device 200 may display another part of notification messages (for example, notification messages from Lisa and Ana shown as an example in FIG. 3J). It is easy to understand that the user may further perform a downward sliding operation on the message notification list shown as an example in FIG. 3J, so that the electronic device 200 returns to display the notification messages from Lily and Ann shown as an example in FIG. 3I.

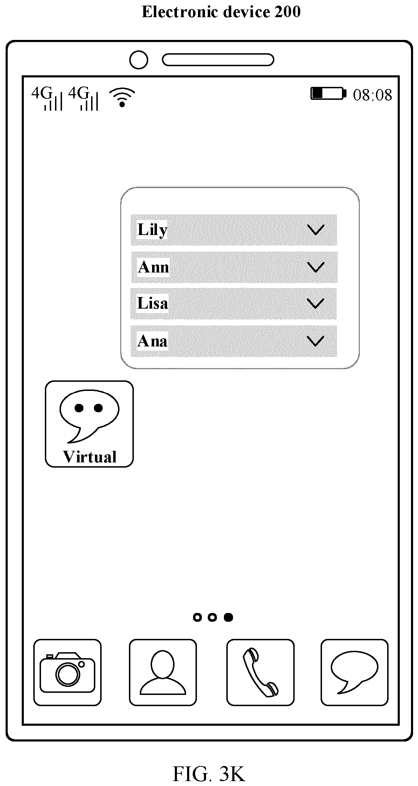

Still refer to FIG. 3I. In some embodiments, an option 353 may be further displayed in the message notification list. The user may tap the option 353 to enable the electronic device 200 to display all notification messages, for example, display a message notification list shown as an example in FIG. 3K, and all notification messages (for example, notification messages from Lily, Ann, Lisa, and Ana) may be displayed in the message notification list.

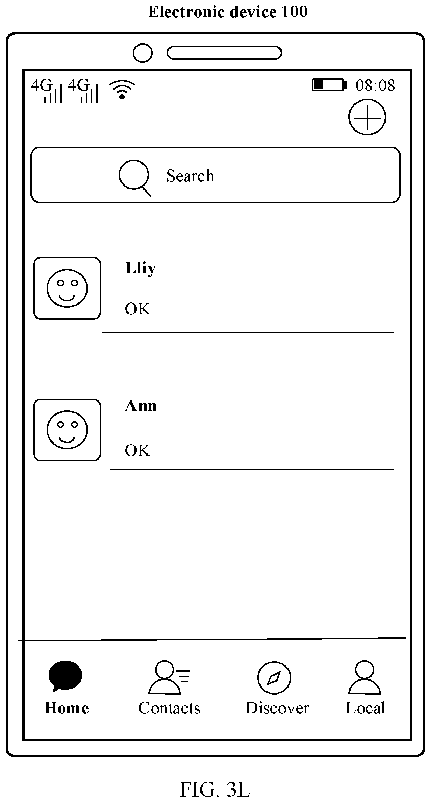

In this embodiment of this application, after the user views (that is, reads), on the electronic device 200, the notification messages (for example, the notification messages from Lily and Ann) of the "Chat" application on the electronic device 100, the electronic device 200 may notify the electronic device 100 (for example, may send an indication message to the electronic device 100 through a message sharing server or directly send an indication message to the electronic device 100) that viewing of the notification messages is completed. Further, the electronic device 100 may mark states of the viewed notification messages as a "read" state. For example, refer to FIG. 3L. It can be learned that, different from that in FIG. 3B, a number badge (for example, a badge of a number 1) is no longer displayed on friend avatars corresponding to two notification messages (for example, "OK" and "Haha") from friends Lily and Ann. Therefore, it may indicate that the two notification messages from the friends Lily and Ann have been viewed by the user, so that the electronic device 100 marks the two notification messages as the "read" state.

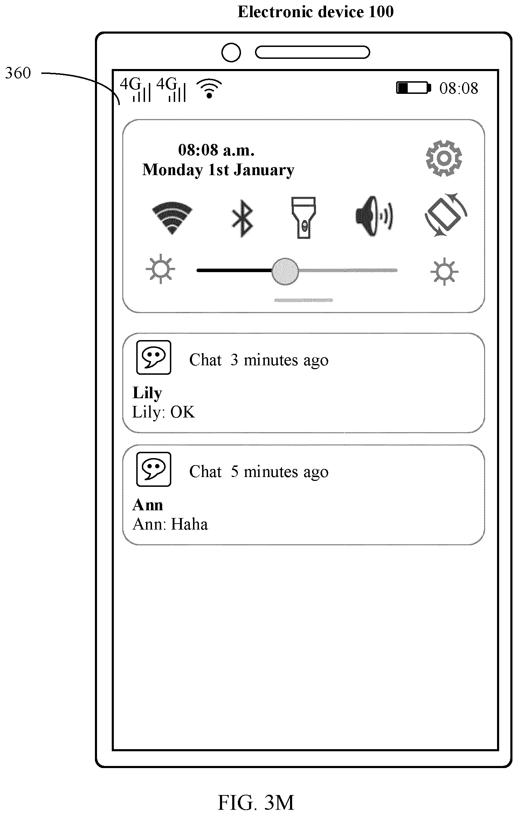

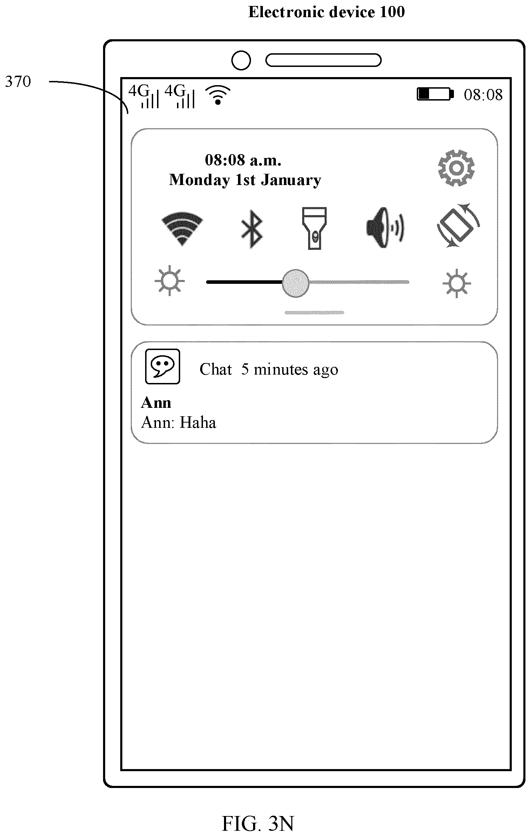

In this embodiment of this application, after the user deletes, on the electronic device 200, the notification message (for example, the notification message from Lily) of the "Chat" application on the electronic device 100, the electronic device 200 may notify the electronic device 100 (for example, may send the indication message to the electronic device 100 through the message sharing server, or directly send the indication message to the electronic device 100) that the notification message is deleted. Further, the electronic device 100 may no longer display the deleted notification message in a notification bar. For example, refer to FIG. 3M. A user interface 360 shown as an example in FIG. 3M may be a user interface corresponding to the notification bar when the user does not delete the notification message. It can be learned that the user interface includes the notification messages from Lily and Ann. If the user deletes the notification message from Lily on the electronic device 200, the electronic device 100 may display a user interface 370 shown in FIG. 3N. It can be learned that, different from that in FIG. 3M, the notification message from Lily is no longer displayed in the user interface 370. Therefore, it may indicate that the notification message from the friend Lily has been deleted by the user, so that the electronic device 100 cancels displaying the notification message from Lily.

Scenario 2 (one or more same applications are installed on all electronic devices of the user):
FIG. 4A to FIG. 4P show examples of a series of user interfaces involved in implementation of a message sharing method in the foregoing scenario 2 according to an embodiment of this application.

It is assumed that the electronic devices owned by the user are the electronic device 100 and the electronic device 200. For example, both the electronic device 100 and the electronic device 200 are mobile phones, and the two electronic devices have logged in to a same account (for example, a same Huawei account).

For example, the user uses the electronic device 100 to view and manage a notification message of the electronic device 100 and a notification message of another electronic device (for example, the electronic device 200) that logs in to a same account as the electronic device 100. It may be understood that notification messages of one or more applications on the electronic device 200 can be viewed and managed on the electronic device 100 only after the electronic device 200 enables the message sharing function of the one or more applications.

The following first describes, with reference to FIG. 4A to FIG. 4F, a process in which the user triggers the electronic device 100 to display a notification message list of an application.

FIG. 4A to FIG. 4F show examples of user interfaces in which the user triggers the electronic device 100 to display the notification message list of the application.

Refer to FIG. 4A. A user interface 410 shown as an example in FIG. 4A may be a user interface of a "Desktop" application, and the user interface may include icons of one or more applications (for example, an icon of a "Weather" application, an icon of a "Health" application, and an icon of a "Browser" application).

In this embodiment of this application, when an application has a new notification message, the electronic device 100 may add a related identifier to an icon of the application, to prompt the user that the application has a new notification message, so that the user can view the new notification message in time.

In this embodiment of this application, that the electronic device 100 adds the related identifier to the icon of the application may be that a horizontal line is added at a bottom of the icon of the application. For example, a horizontal line is added at a bottom of both the icon of the "Browser" application and the icon of the "Health" application shown in FIG. 4A, indicating that the "Browser" application and the "Browser" application have a new notification message. In addition to adding the horizontal line at the bottom of the icon, the electronic device 100 may add a related identifier to the icon of the application in another manner (for example, superimposing and displaying a number badge on the icon of the application). This is not limited in this embodiment of this application.

Still refer to FIG. 4A. If the user wants to view a notification message of an application, for example, a notification message of the "Browser" application, the electronic device 100 may detect an operation (for example, an upward sliding operation shown in FIG. 4A) performed by the user on the icon of the "Browser" application, and in response to the operation, the electronic device 100 may display a user interface 420 shown as an example in FIG. 4B.

Refer to FIG. 4B. The user interface 420 may include icons of one or more applications. The icons of the one or more applications may be icons of applications (for example, the icon of the "Browser" application or the icon of the "Health" application) that each have a new notification message.

In this way, the electronic device 100 may display, in the same user interface in a cluster manner, the icons of all the applications that each have a new notification message, so that the notification messages may be classified and managed based on the applications. In this way, the user can learn of the specific applications that each have a new notification message, and the user can quickly locate an application of which the user wants to view the notification message. This avoids a problem that the user needs to manually identify key information in a pile of unclassified and disordered notification messages in the notification bar, simplifies user operations, and improves user experience.

It should be noted that a display form of the user interface 420 shown in FIG. 4B is not limited in this embodiment of this application. The user interface 420 may be displayed in the user interface 410 in a floating manner in a form of an entire page, or may be displayed in the user interface 410 in a floating manner in a form of an FA widget/pop-up window, or the like. This is not limited in this embodiment of this application.

Still refer to FIG. 4B. If the user wants to view a notification message of an application, the user may perform an operation (for example, an upward sliding operation or a tap operation) on an icon of the application to trigger display of a notification message list of the application, so as to view the notification message of the application. For example, the user wants to view the notification message of the "Browser" application. The electronic device 100 may detect an operation (for example, an upward sliding operation or a tap operation) performed by the user on the icon of the "Browser" application, and in response to the operation, the electronic device 100 may display a notification message list 430 shown as an example in FIG. 4C.

It should be noted that the operation performed by the user on the icon of the application may be an upward sliding operation, a tap operation, or the like. This is not limited in this embodiment of this application.

In some embodiments, the user interface shown in FIG. 4C may be directly displayed after the user completes, in FIG. 4A, the operation (for example, the upward sliding operation) on the icon of the "Browser" application. The user does not need to complete, in the user interface shown in FIG. 4B, the operation on the icon of the "Browser" application, to display the user interface shown in FIG. 4C.

Refer to FIG. 4C. The notification message list 430 may include options (for example, an option 431 and an option 432) corresponding to one or more notification messages of the "Browser" application. It can be learned that the option 431 is an option corresponding to the notification message "Headline news 1", and the option 432 is an option corresponding to the notification message "Headline news 2".

Optionally, the notification message list 430 may further include an option 433, used to view more notification messages.

Optionally, the notification message list 430 may further include an identifier 434, indicating a quantity of notification messages included in the notification message list of the application. For example, the identifier 434 is "+4", indicating that a quantity of notification messages included in the notification message list of the "Browser" application is 4.

The notification message list 430 may be displayed in a form of a widget, or may be displayed in another form (for example, a pop-up window form). This is not limited in this embodiment of this application.

In this embodiment of this application, the notification message list 430 may be displayed in a form of an FA widget.

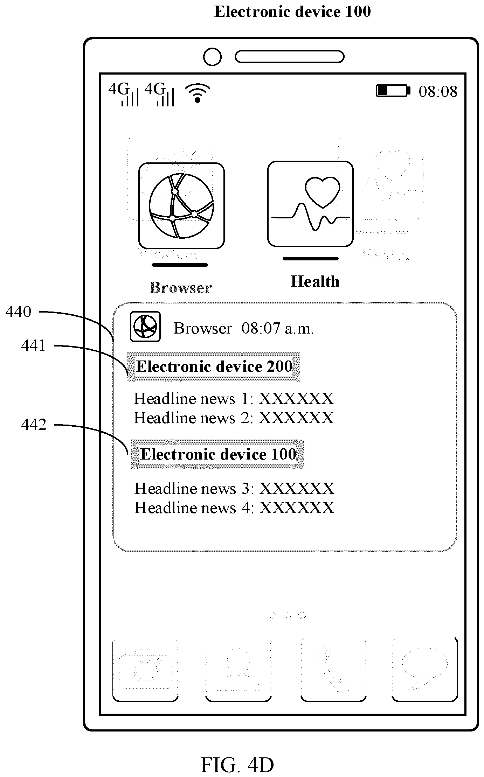

Refer to FIG. 4D. In some embodiments, to help the user learn of an electronic device from which each notification message comes, an identifier (for example, a picture identifier or a text identifier) of the electronic device may be further displayed in the notification message list. For example, an identifier 441 of the electronic device 200 and an identifier 442 of the electronic device 100 may be displayed in a notification message list 440. It can be easily learned that the two notification messages "Headline news 1" and "Headline news 2" are from the electronic device 200, and two notification messages "Headline news 3" and "Headline news 4" are from the electronic device 100. The identifier of the electronic device may include but is not limited to a device name, a device type, and the like of the electronic device.

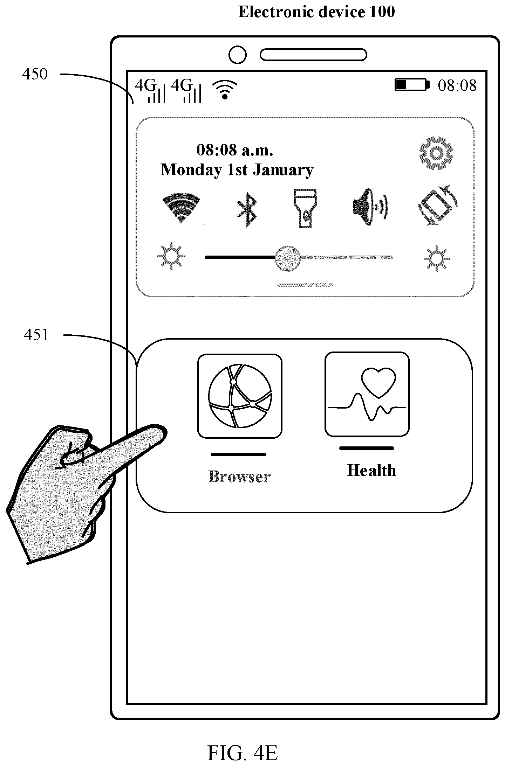

FIG. 4A to FIG. 4D show that icons of one or more applications that each have a new notification message are displayed in a user interface of the "Desktop" application in a cluster manner. In some embodiments, the icons may alternatively be displayed in a user interface corresponding to a notification bar shown as an example in FIG. 4E in a cluster manner.

Refer to FIG. 4E. A user interface 450 may be the user interface corresponding to the notification bar. The user interface may include an application icon list 451, the application icon list 451 may include icons of one or more applications, and the icons of the one or more applications may be icons of applications (for example, the icon of the "Browser" application or the icon of the "Health" application) that each have a new notification message.

The application icon list 451 may be displayed in a form of a widget, or may be displayed in another form (for example, a pop-up window form). This is not limited in this embodiment of this application.

In this embodiment of this application, the application icon list 451 may be displayed in a form of an FA widget.

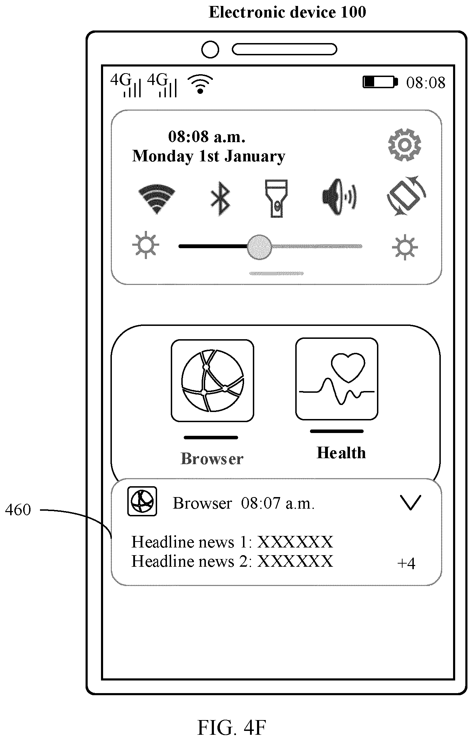

Still refer to FIG. 4E. If the user wants to view a notification message of an application, the user may perform an operation (for example, an upward sliding operation or a tap operation) on an icon of the application to trigger display of a notification message list of the application, so as to view the notification message of the application. For example, the user wants to view the notification message of the "Browser" application. The electronic device 100 may detect an operation (for example, an upward sliding operation or a tap operation) performed by the user on the icon of the "Browser" application, and in response to the operation, the electronic device 100 may display a notification message list 460 shown as an example in FIG. 4F.

It should be noted that the operation performed by the user on the icon of the application may be an upward sliding operation, a tap operation, or the like. This is not limited in this embodiment of this application.

It is easy to understand that the notification message list 460 is similar to the notification message list 430. For descriptions of the notification message list 460, refer to the foregoing related text content of the notification message list 430. Details are not described herein again.

In some embodiments, after the user completes, in FIG. 4A, the operation (for example, the upward sliding operation) on the icon of the "Browser" application, the electronic device 100 may alternatively directly display, in the user interface shown in FIG. 4A, the notification message list 430 shown in FIG. 4C. In other words, the electronic device 100 may not display, in a clustering manner, all applications that each have a new notification message. But the user performs the operation (for example, the upward sliding operation) on an icon of a specific application, and the electronic device 100 directly displays a notification message list corresponding to the specific application.

With reference to FIG. 4G to FIG. 4P, the following describes a process in which the user views a notification message, deletes a notification message, and updates a notification message in the notification message list.

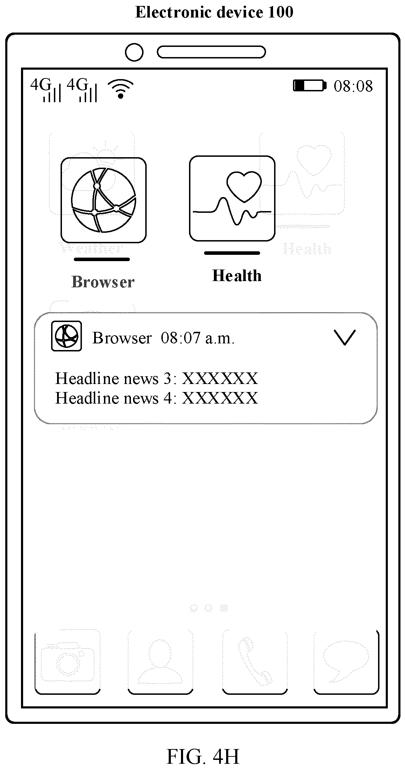

FIG. 4G and FIG. 4H show an example of user interfaces in which the user performs an upward/downward sliding operation on the message notification list to view more notification messages.

Refer to FIG. 4G. If there are a large quantity of notification messages in the message notification list 430, the electronic device 100 may first display some notification messages (for example, the two notification messages "Headline news 1" and "Headline news 2"). Further, the electronic device 100 may detect an operation (for example, the upward sliding operation shown in FIG. 4G) performed by the user on the message notification list 430, and in response to the operation, the electronic device 100 may display other notification messages (for example, the two notification messages "Headline news 3" and "Headline news 4) shown as an example in FIG. 4H. It is easy to understand that the user may further enable, by performing a downward sliding operation on the message notification list shown as an example in FIG. 4H, the electronic device 100 to return to display the two notification messages "Headline news 1" and "Headline news 2" shown as an example in FIG. 4G.

Still refer to FIG. 4G. In some embodiments, the option 433 may be further displayed in the message notification list 430. The user may tap the option 433 to enable the electronic device 100 to display all notification messages, for example, display the message notification list shown as an example in FIG. 4D, where the message notification list may display all notification messages (for example, the four notification messages: "Headline news 1", "Headline news 2", "Headline news 3", and "Headline news 4").

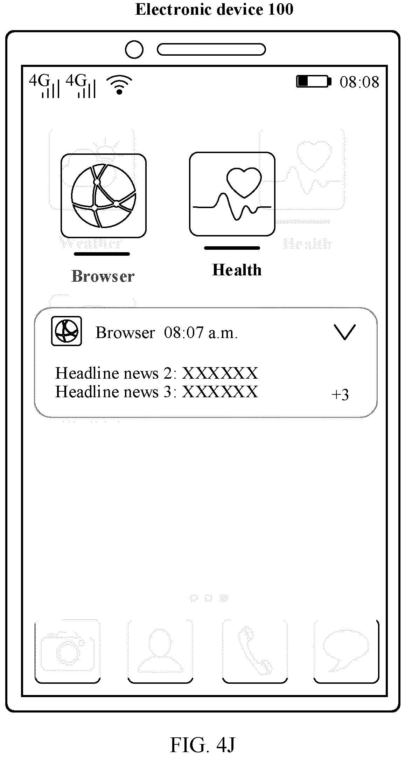

FIG. 4I and FIG. 4J show examples of user interfaces in which the user deletes a notification message from a message notification list.

Refer to FIG. 4I. If the user wants to delete a notification message (that is, remove the notification message from the notification message list), the user may perform an operation on an option corresponding to the notification message to delete the notification message. For example, if the user wants to delete a notification message corresponding to the option 431 (that is, the notification message "Headline news 1"), the electronic device 100 may detect an operation (for example, a rightward sliding operation) performed by the user on the option 431, and in response to the operation, the electronic device 100 may display a notification message list shown as an example in FIG. 4J.

Refer to FIG. 4J. It can be learned that the notification message list no longer displays the notification message corresponding to the option 431, and the quantity identifier of the notification messages changes from "+4" shown in FIG. 4I to "+3" shown in FIG. 4J. In other words, the electronic device 100 removes the notification message corresponding to the option 431 from the notification message list, and the quantity of notification messages is correspondingly reduced by one. Similarly, the user may also delete another notification message (for example, a notification message like "Headline news 2" or "Headline news 3) in the foregoing manner. Details are not described herein again.

It should be noted that the operation performed by the user on the option 431 is merely the rightward sliding operation as an example, or may be another operation (for example, a leftward sliding operation). This is not limited in this embodiment of this application.

FIG. 4K and FIG. 4L show examples of user interfaces in which the user views specific content of a notification message in the message notification list.

Refer to FIG. 4K. If the user wants to view specific content of a notification message in the notification message list, the user may perform an operation on an option corresponding to the notification message, to view the specific content of the notification message in the notification message list. For example, if the user wants to view, in the notification message list, specific content of a notification message corresponding to the option 431 (that is, the notification message "Headline news 1"), the electronic device 100 may detect an operation (for example, an operation of tapping the option 431) performed by the user on the option 431. In response to the operation, the electronic device 100 may display the specific content of the notification message corresponding to the option 431 shown as an example in FIG. 4L. Similarly, the user may also view specific content of another notification message (for example, the notification message "Headline news 2") in the foregoing manner. Details are not described herein again.

In this way, the user may view the specific content of the notification message in the notification message list, and the user does not need to open an application that sends the notification message. This is convenient and quick.

It should be noted that the operation performed by the user on the option 431 is merely a single-tap operation (which may also be referred to as the tap operation) as an example, or may be another operation. This is not limited in this embodiment of this application.

FIG. 4M and FIG. 4N show examples of user interfaces in which the user jumps to an application to view specific content of a notification message.

Refer to FIG. 4M. If the user wants to jump to an application that sends a notification message to view specific content of the notification message, the user may perform an operation on an option corresponding to the notification message, to jump to the application that sends the notification message to view the specific content of the notification message. For example, if the user wants to jump to an application that sends the notification message (that is, the notification message "Headline news 1") corresponding to the option 431 to view specific content of the notification message, the electronic device 100 may detect an operation performed by the user on the option 431 (for example, an operation of double-tapping the option 431), and in response to the operation, the electronic device 100 may display a user interface shown as an example in FIG. 4N. The user interface is a user interface (namely, a details page of the notification message corresponding to the option 431) inside the application that sends the notification message corresponding to the option 431. The specific content of the notification message corresponding to the option 431 may be displayed in the user interface. Similarly, the user may also view specific content of another notification message (for example, the notification message "Headline news 2") in the foregoing manner. Details are not described herein again.

It is easy to understand that, in some applications, if the user needs to log in to an account before entering the application to view specific content of a notification message and the user does not log in to the account in advance, after the user double-taps an option corresponding to the notification message, the electronic device 100 may first display a login interface of the application, and after the user logs in to the account, a user interface of the specific content of the notification message is displayed.

It is easy to understand that, similar to that in the foregoing scenario 1, after the user deletes/views a notification message of another electronic device (for example, the electronic device 200) on the electronic device 100, the electronic device 100 may notify the another electronic device (for example, may send an indication message to the electronic device 200 through the message sharing server or directly send an indication message to the electronic device 200) that the notification message is deleted/viewed, the another electronic device may no longer display the notification message in the notification bar, or mark a state of the notification message as a "read" state.

In some embodiments, after viewing a notification message of an application on the electronic device 100, the user may cancel display of an identifier (for example, a horizontal line at the bottom of the icon) added to an icon of the application, to indicate that all notification messages of the application are in the "read" state, and there is no new notification.

FIG. 4O and FIG. 4P show examples of user interfaces in which the user updates a notification message in the message notification list.

Refer to FIG. 4O. If the user wants to update the notification messages in the message notification list (that is, refresh the notification message list), the user may perform an operation on the notification message list to update the notification messages in the message notification list.

For example, the message notification list shown in FIG. 4O is a message notification list refreshed at "08:07 a.m.", and a current time is "08:08 a.m.". If the user wants the electronic device 100 to display a message notification list refreshed at "08:08 a.m.", the electronic device 100 may detect an operation of refreshing the notification message list by the user (for example, a double-tap operation performed by the user on an area in which a dashed-line box shown in FIG. 4O is located), and in response to the operation, the electronic device 100 may refresh the notification message list, and display the notification message list that is refreshed at "08:08 a.m." and that is shown as an example in FIG. 4P.

The area in which the dashed-line box shown in FIG. 4O is located may be referred to as an area in which a title of the notification message list is located.

In some embodiments, the electronic device 100 may alternatively periodically refresh the notification message list, and the user does not need to manually refresh the notification message list.

Refer to FIG. 4P. Notification messages (for example, "Headline news 1" and "Headline news 2") displayed in a refreshed notification message list shown in FIG. 4P and notification messages displayed in the notification message list shown in FIG. 4O (for example, "Headline news 1" and "Headline news 2") may be different, and quantities of notification messages may also be different (for example, four notification messages in FIG. 4O are changed to five notification messages in FIG. 4P).

It is easy to understand that, in some embodiments, notification messages displayed in the message notification list before the refresh and notification messages displayed in the message notification list after the refresh may be completely the same/partially the same/completely different, and quantities of notification messages may also be the same/different.

It should be noted that embodiments shown in FIG. 4O to FIG. 4P are also applicable to the foregoing scenario 1. In other words, in the foregoing scenario 1, the user may also be supported in refreshing the notification message list.

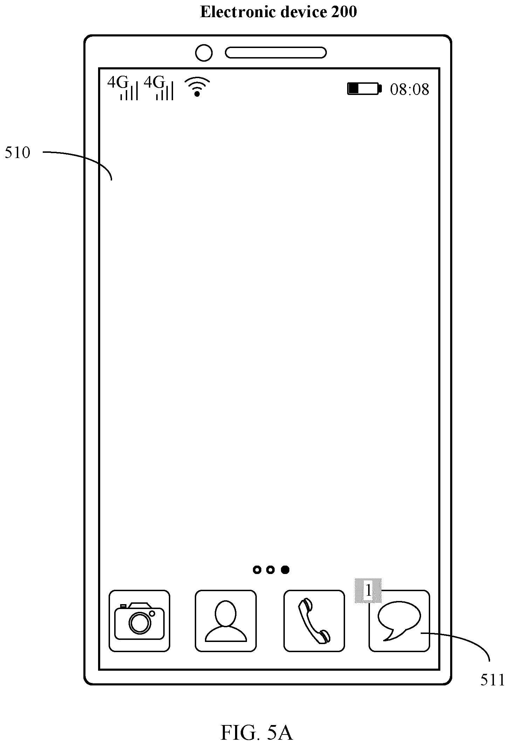

With reference to FIG. 5A to FIG. 5H, the following describes another series of user interfaces in a different display form that is involved in implementation of the message sharing method in the foregoing scenario 2 according to this embodiment of this application.

It is assumed that electronic devices owned by the user are an electronic device 100, an electronic device 200, and an electronic device 300. For example, all the electronic device 100, the electronic device 200, and the electronic device 300 are mobile phones, and the three electronic devices have logged in to a same account (for example, a same Huawei account).

For example, the user uses the electronic device 100 to view and manage a notification message of the electronic device 100 and notification messages of other electronic devices (for example, the electronic device 200 and the electronic device 300) that log in to the same account as the electronic device 100. It may be understood that notification messages of one or more applications on the electronic device 200 and the electronic device 300 can be viewed and managed on the electronic device 100 only after a message sharing function of the one or more applications is enabled on the electronic device 200 and the electronic device 300.

FIG. 5A to FIG. 5D show examples of user interfaces in which the user triggers the electronic device 100 to display the notification message list of the application.

In this embodiment of this application, a process in which the user triggers the electronic device 100 to display the notification message list of the application is described by using a "Messages" application as an example.

Refer to FIG. 5A. A user interface 510 shown in FIG. 5A may be a user interface provided by a "Desktop" application of the electronic device 200. The user interface may include icons of one or more applications (for example, an icon 511 of the "Messages" application). It can be learned that a number badge (for example, a badge of a number "1") is displayed on the icon 511 of the "Messages" application, indicating that there is one unread notification message in the "Messages" application of the electronic device 200.

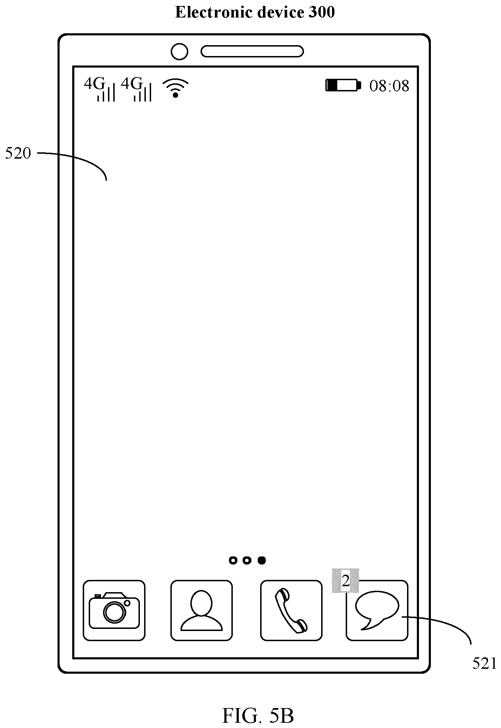

Refer to FIG. 5B, a user interface 520 shown in FIG. 5B may be a user interface provided by the "Desktop" application of the electronic device 300. The user interface may include icons of one or more applications (for example, an icon 521 of the "Messages" application). It can be learned that a number badge (for example, a badge of a number "2") is displayed on the icon 521 of the "Messages" application, indicating that there are two unread notification messages in the "Messages" application of the electronic device 300.

Refer to FIG. 5C. A user interface 530 shown in FIG. 5C may be a user interface provided by the "Desktop" application of the electronic device 100. The user interface may include icons of one or more applications (for example, an icon 531 of a "Messages" application). It can be learned that a number badge (for example, a badge of a number "3") is displayed on the icon 531 of the "Messages" application, indicating that there are three unread notification messages in the "Messages" application of the electronic device 100. It is easy to understand that the three unread notification messages are respectively one unread notification message from the "Messages" application of the electronic device 200 and two unread notification messages from the "Messages" application of the electronic device 200.

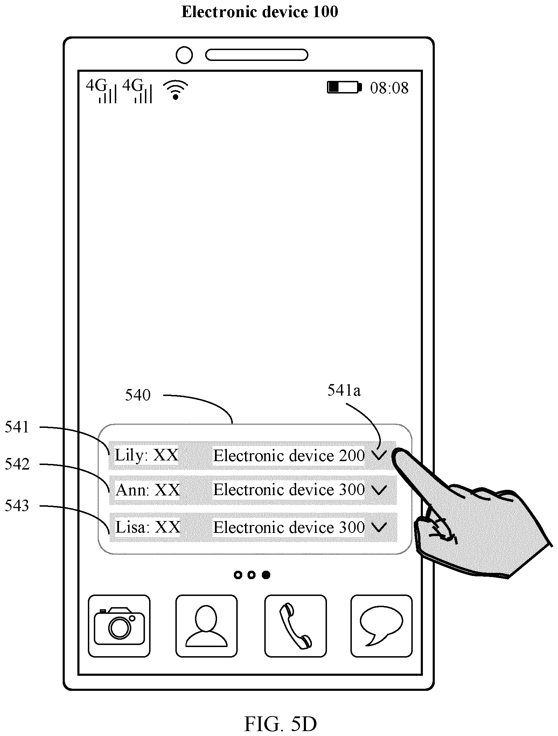

Still refer to FIG. 5C. If the user wants to view a notification message of the "Messages" application, the electronic device 100 may detect an operation (for example, an upward sliding operation shown in FIG. 5C) performed by the user on the icon of the "Messages" application, and in response to the operation, the electronic device 100 may display a notification message list 540 shown as an example in FIG. 5D.

It should be noted that the operation performed by the user on the icon of the "Messages" application may be an upward sliding operation, or may be another operation. This is not limited in this embodiment of this application.

Refer to FIG. 5D, the notification message list 540 may include options (for example, an option 541, an option 542, and an option 543) corresponding to the three unread notification messages of the "Messages" application. It can be learned that the option 541 is an option corresponding to a notification message sent by Lily, the option 542 is an option corresponding to a notification message sent by Ann, and the option 543 is an option corresponding to a notification message sent by Lisa.

The notification message list 540 may be displayed in a form of a widget, or may be displayed in another form (for example, a pop-up window form). This is not limited in this embodiment of this application.

In this embodiment of this application, the notification message list 540 may be displayed in a form of an FA widget.

To help the user learn of an electronic device from which each notification message comes, the notification message list may further display an identifier (for example, a picture identifier or a text identifier) of the electronic device. It can be easily learned that the notification message sent by Lily is from the electronic device 200, and the two notification messages sent by Ann and Lisa are from the electronic device 300. The identifier of the electronic device may include but is not limited to a device name, a device type, and the like of the electronic device.

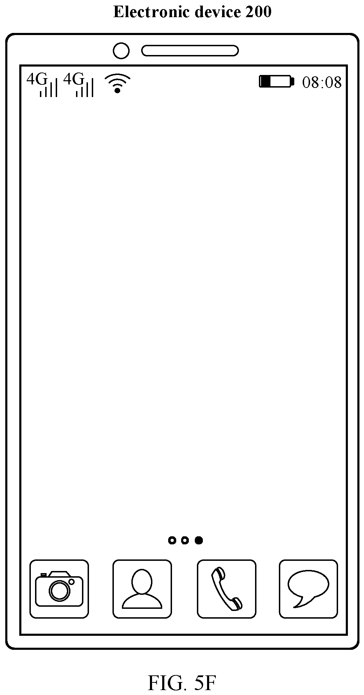

FIG. 5D and FIG. 5F show examples of user interfaces on which the user views a notification message on the electronic device 100.

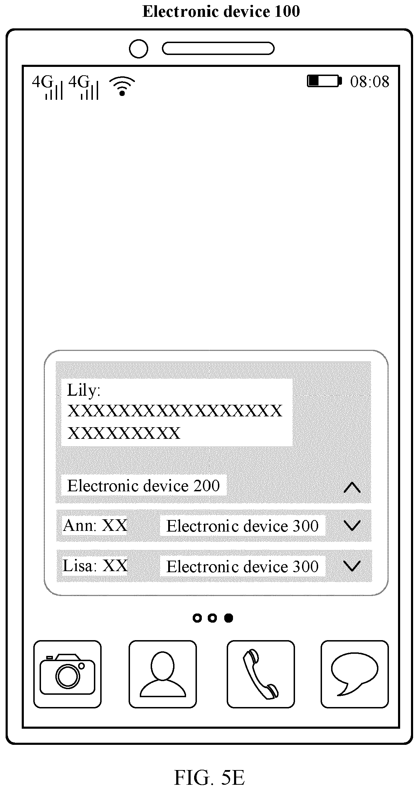

Refer to FIG. 5D. If the user wants to view specific content of a notification message in the notification message list, the user may perform an operation on an option corresponding to the notification message, to view the specific content of the notification message in the notification message list. For example, if the user wants to view, in the notification message list, specific content of the notification message corresponding to the option 541 (that is, the notification message sent by Lily), the electronic device 100 may detect an operation (for example, an operation of tapping the option 541) performed by the user on the option 541, and in response to the operation, the electronic device 100 may display the specific content of the notification message corresponding to the option 541 shown as an example in FIG. 5E. Similarly, the user may also view specific content of another notification message (for example, the two notification messages sent by Ann and Lisa) in the foregoing manner. Details are not described herein again.

Optionally, refer to FIG. 5D. A sub-option (for example, a sub-option 541a) used to view specific content of a notification message may be further displayed on an option corresponding to each notification message. The user may also trigger, by tapping the corresponding sub-option, the electronic device 100 to display the specific content of the notification message.

In some embodiments, the user may alternatively double-tap the option corresponding to the notification message to enter the "Messages" application to view the specific content of the notification message.

In this embodiment of this application, after the user views a notification message of another electronic device (for example, the electronic device 200) on the electronic device 100, the electronic device 100 may notify the electronic device 200 (for example, notify the electronic device 200 through a message sharing server) that the notification message is viewed. Further, the electronic device 200 may mark a state of the viewed notification message as a "read" state. For example, refer to FIG. 5F. It can be learned that, different from that in FIG. 5A, a number badge is no longer displayed on the icon of the "Messages" application. Therefore, it may indicate that the unread notification message on the electronic device 200 has been viewed by the user, so that the electronic device 200 marks the notification message as a "read" state.

Similarly, the user may also delete a notification message by performing a leftward sliding operation or a rightward sliding operation on the electronic device 100. For details, refer to related content in the foregoing embodiments. Details are not described herein again.

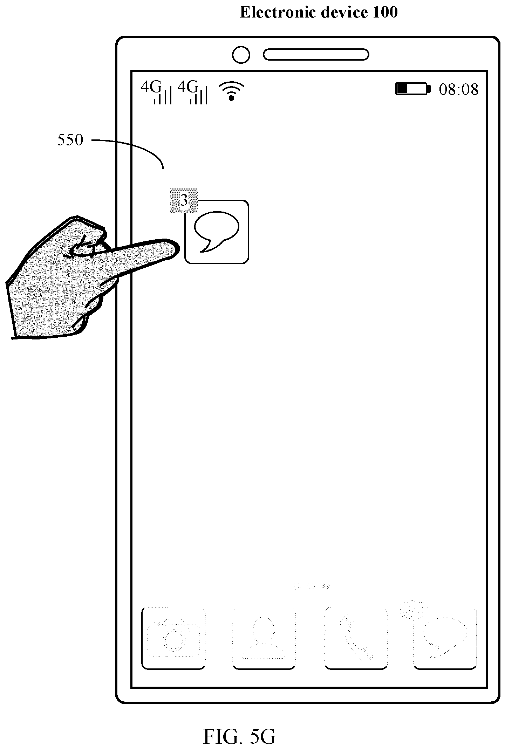

In some embodiments, refer to FIG. 5C. After the electronic device 100 detects an operation (for example, the upward sliding operation shown in FIG. 5C) performed by the user on the icon of the "Messages" application, in response to the operation, the electronic device 100 may alternatively not display the notification message list 540 shown as an example in FIG. 5D, but display a user interface 550 shown as an example in FIG. 5G.

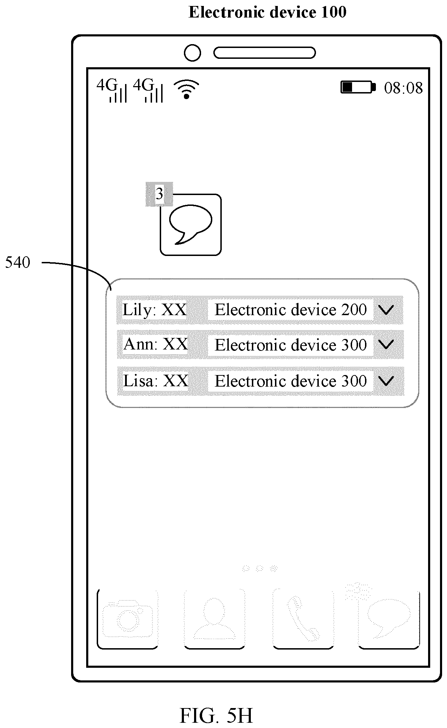

Refer to FIG. 5G. The user interface 550 may include icons of one or more applications. The icons of the one or more applications may be icons of applications (for example, the icon of the "Messages" application) that each have a new notification message. The electronic device 100 may detect an operation (for example, the upward sliding operation or the tap operation) performed by the user on the icon of the "Messages" application, and in response to the operation, the electronic device 100 may display the notification message list 540 shown as an example in FIG. 5H.

For descriptions of the notification message list 540, refer to the foregoing related content. Details are not described herein again.

Similarly, the user may also perform an operation on the notification message list 540 to view specific content of the notification message, delete the notification message, and the like. For details, refer to the foregoing related content. Details are not described herein again.

In some embodiments, the user interface shown in FIG. 5H may be directly displayed after the user completes, in FIG. 5C, the operation (for example, the upward sliding operation) on the icon of the "Messages" application. The user does not need to complete, in the user interface shown in FIG. 5G, the operation on the icon of the "Messages" application, to display the user interface shown in FIG. 5H.

With reference to a series of user interfaces in the scenario 1 (a specific application is installed and logged in to on one electronic device of the user, and the application is not installed or logged in to on other electronic devices) and the scenario 2 (one or more same applications are installed on all electronic devices of the user), the following separately describes in detail specific processes of implementing the message sharing method in the scenario 1 and the scenario 2 according to embodiments of this application.

Scenario 1 (a specific application is installed and logged in to on one electronic device of the user, and the application is not installed or logged in to on another electronic device):
The following describes a specific execution process of the message sharing method in the foregoing scenario 1 according to this embodiment of this application.

FIG. 6A and FIG. 6B show an example of a specific process of a message sharing method in the foregoing scenario 1 according to an embodiment of this application.

As shown in FIG. 6A and FIG. 6B, the method may be applied to a communication system including an electronic device 100, an electronic device 200, a server 101 (an application server), and a server 102 (a message sharing server). The electronic device 100 and the electronic device 200 may log in to a same account (for example, a Huawei account). The following describes in detail specific steps of the method.

S601 to S603: The server 101 sends a notification message 1 to the electronic device 100, the electronic device 100 generates data 1 based on the notification message 1, and the electronic device 100 displays the notification message 1.

Specifically, the server 101 (the application server) may be a server of an application installed on the electronic device 100. In this case, when the application needs to send a new notification message to the electronic device 100, the server 101 may send the notification message of the application to the electronic device 100. After receiving the notification message sent by the server 101, the electronic device 100 may display the notification message.

The foregoing "Chat" application is also used as an example. The server 101 may be a server of the "Chat" application. When the "Chat" application needs to send a new notification message to the electronic device 100, if the new notification message is a notification message 1, the server 101 may send the notification message 1 to the electronic device 100. After receiving the notification message 1, the electronic device 100 may display the notification message 1 (for example, display the notification message 1 in a notification bar or in a user interface of the "Chat" application).

For example, the notification message 321 or the notification message 322 shown in FIG. 3B may be generated and displayed by the electronic device 100 based on the notification message 1.

In this embodiment of this application, to help the user view a cross-device notification message, after receiving the notification message 1, the electronic device 100 may encapsulate the notification message 1 to generate the data 1, so that the data 1 may be subsequently uploaded to the server 102 (the message sharing server). The server 102 sends the notification message 1 to another electronic device, so that the user can also view the notification message 1 on the another electronic device.

A format of the data 1 may be a JSON format. This is not limited thereto, and may alternatively be another format. This is not limited in this embodiment of this application.

The data in the JSON format may include the following fields: a message type of the notification message, a message title, and message content. The "message type" may indicate the application corresponding to the notification message, for example, may include a package name of the application (for example, a package name of the "Chat" application) corresponding to the notification message. The "message title" may indicate a sender corresponding to the notification message, for example, may include a name of a sender corresponding to the notification message (for example, a remark name of a friend or a name of a subscription number). The "message content" may include specific content of the notification message.

For example, the notification message 1 is the notification message "OK" sent by the friend Lily in the "Chat" application. If the package name of the "Chat" application is com.xx.chat, the data 1 in the JSON format may be {{com.xx.chat}, {Lily}, {OK}}.

In some embodiments, the data 1 may further include unique identification information of the notification message 1, for example, ID information of the notification message 1. In this way, after subsequently performing an operation like deletion or read on the notification message 1, the user may indicate, through the server 102 based on the ID information of the notification message 1, the electronic device 100 to change a state of the notification message 1.

In some embodiments, the data 1 may further include device information of the electronic device 100, for example, a device name and a device type, so that the another electronic device can learn of a specific electronic device on which the notification message 1 is located.

It should be noted that a time sequence of performing step S602 and step S603 is not limited in this embodiment of this application. For example, step S602 may be performed before, after, and simultaneously with step S603.

S604: The electronic device 100 determines whether a plurality of devices log in to an account 1 and message sharing is set. If the plurality of devices log in to the account 1 and message sharing is set, the electronic device 100 performs the following step S605.

If the login account (for example, a Huawei account) of the electronic device 100 is the account 1, and the notification message 1 is a notification message of the "Chat" application, after the electronic device 100 receives the notification message 1 sent by the server 101, the electronic device 100 may determine whether a plurality of devices (that is, another electronic device other than the electronic device 100, for example, the electronic device 200) log in to the account 1, and determine whether message sharing is set on the electronic device 100 (for example, a message sharing function of the "Chat" application is enabled). If the plurality of devices log in to the account 1 and message sharing is set on the electronic device 100, for example, if the electronic device 100 determines that the electronic device 200 also logs in to the account 1, and the electronic device 100 enables the message sharing function of the "Chat" application, the electronic device 100 may perform the following step S605. If the plurality of devices do not log in to the account 1 and message sharing is not set on the electronic device 100, the electronic device 100 does not perform a subsequent step.

In some embodiments, the electronic device 100 may alternatively perform step S602 after determining "Yes" in step S604, and perform the following step S605 after performing S602.

S605 to S607: The electronic device 100 sends the data 1 to the server 102, the server 102 stores the data 1, and the server 102 sends the data 1 to the electronic device 200.

After receiving the data 1 sent by the electronic device 100, the server 102 may first determine specific electronic devices that log in to the same account (for example, the account 1) as the electronic device 100. After the determining is completed, the server 102 may send the data 1 to all the electronic devices that log in to the same account as the electronic device 100. All the electronic devices that log in to the same account as the electronic device 100 may include the electronic device 200.

There may be a plurality of implementations in which the server 102 determines specific electronic devices that log in to the same account as the electronic device 100. For example, the server 102 may store, in advance, device information of all the electronic devices that log in to the account 1, or obtain device information of all the electronic devices that log in to the account 1 from another server (for example, a server configured to perform account management), and determine, based on the device information, the other electronic devices that log in to the same account as the electronic device 100. For another example, the electronic device 100 may alternatively send, to the server 102, device information of the other electronic devices that log in to the same account as the electronic device 100, and the server 102 sends the data 1 to a corresponding device based on the device information.

S608: The electronic device 200 displays a virtual icon 1 based on the data 1.

Specifically, after receiving the data 1 sent by the server 102, the electronic device 200 may parse the data 1, and then may display the virtual icon 1 based on content in the "message type" field in the data 1 obtained through parsing. For example, the "message type" field includes a package name of an application corresponding to the notification message 1. If the package name is the package name of the "Chat" application, the virtual icon 1 is a virtual icon (for example, the virtual icon 331 shown in FIG. 3C) corresponding to the "Chat" application.

An implementation in which the electronic device 200 generates and displays the virtual icon 1 is not limited in this embodiment of this application. In some embodiments, for example, when the "Chat" application is not installed on the electronic device 200, the electronic device 200 may download an icon of the "Chat" application from a network based on the package name of the "Chat" application, and display the virtual icon 1 based on the downloaded icon of the "Chat" application. In some other embodiments, when the electronic device 200 installs but does not log in to the "Chat" application, the electronic device 200 may display the virtual icon 1 based on the icon of the installed "Chat" application. In some other embodiments, the virtual icon 1 may alternatively be sent by the electronic device 100 to the electronic device 200 through the server 102 (for example, the virtual icon 1 may be included in the data 1). In some other embodiments, the virtual icon 1 may alternatively be obtained by the server 102 based on content in the "message type" field in the data 1, and then the server 102 sends the data 1 and the virtual icon 1 together to the electronic device 200.

S609 and S610: The electronic device 200 detects an operation performed by the user on the virtual icon 1, and in response to the operation, the electronic device 200 displays a notification message list 1, where the notification message list includes the notification message 1.

Specifically, after the electronic device 200 displays the virtual icon 1, the electronic device 200 may detect an operation (for example, the upward sliding operation shown in FIG. 3E) performed by the user on the virtual icon 1, and in response to the operation, the electronic device 200 may display the notification message list 1 (for example, a notification message list 350 shown in FIG. 3F). The notification message list may be a notification message list of an application corresponding to the virtual icon 1. The notification message list may include the notification message 1 (for example, the notification message from Lily or the notification message from Ann shown in FIG. 3F).

S611 and S612: The electronic device 200 detects a deletion operation performed by the user on the notification message 1, and in response to the operation, the electronic device 200 cancels display of the notification message 1.

Specifically, after the electronic device 200 displays the notification message list 1, if the user wants to delete the notification message 1, the electronic device 200 may detect a deletion operation (for example, the rightward sliding operation shown in FIG. 3G) performed by the user on the notification message 1, and in response to the operation, the electronic device 200 may cancel display of the notification message 1.

For example, before the user deletes the notification message 1, it is assumed that the notification message list 1 includes two notification messages from Lily and Ann shown in FIG. 3G, and the notification message 1 is the notification message sent by Lily. In this case, after the user deletes the notification message 1, the electronic device 200 may cancel display of the notification message 1 in the notification message list, and display only the notification message from Ann shown in FIG. 3H.

S613 and S616: The electronic device 200 sends a deletion notification of the notification message 1 to the server 102, and the server 102 deletes the data 1. Then, the server 102 sends an update notification to the electronic device 100, where the notification indicates the electronic device 100 to update the state of the notification message 1, and then the electronic device 100 updates the state of the notification message 1.

Specifically, after the electronic device 200 detects the deletion operation performed by the user on the notification message 1, the electronic device 200 may send the deletion notification of the notification message 1 to the server 102, where the deletion notification may include ID information of the notification message 1 and indication information of deleting the notification message 1 (for example, state information that the notification message 1 is deleted). After receiving the deletion notification, the server 102 may find the stored data 1 based on the ID information of the notification message 1, and delete the data 1. Then, the server 102 may further send an update notification to the electronic device 100. The notification indicates the electronic device 100 to update the state of the notification message 1. After receiving the update notification sent by the server 102, the electronic device 100 may update the state of the notification message 1, that is, update the state of the notification message 1 to a "deleted" state.

For example, before the user deletes the notification message 1, it is assumed that the notification bar of the electronic device 100 includes the two notification messages from Lily and Ann shown in FIG. 3M, and the notification message 1 is the notification message sent by Lily. In this case, after the user deletes the notification message 1, the electronic device 100 may cancel display of the notification message 1 in the notification bar, and display only the notification message from Ann shown in FIG. 3N.

In this embodiment of this application, in addition to performing the deletion operation on the notification message 1, the user may further perform the read operation on the notification message 1 (that is, an operation of viewing specific content of the notification message 1). This is similar to step S613 to step S616. After the electronic device 200 detects the read operation performed by the user on the notification message 1, the electronic device 200 may send a read notification of the notification message 1 to the server 102, where the read notification may include the ID information of the notification message 1 and indication information that the notification message 1 is read (for example, state information that the notification message 1 is read). After receiving the read notification, the server 102 may find the stored data 1 based on the ID information of the notification message 1, and may update the state of the notification message 1 to the "read" state in the data 1 (or may delete the data 1). Then, the server 102 may further send an update notification to the electronic device 100. The notification indicates the electronic device 100 to update the state of the notification message 1. After receiving the update notification sent by the server 102, the electronic device 100 may update the state of the notification message 1, that is, update the state of the notification message 1 to the "read" state.

For example, it is assumed that the notification message 1 is the notification message sent by Lily. Before the user reads the notification message 1, the electronic device 100 may display a number badge on an avatar of Lily shown in FIG. 3B. In this case, after the user reads the notification message 1, the electronic device 100 may cancel display of the number badge on the avatar of Lily.

Step S613 to step S615 are a possible implementation in which the electronic device 200 indicates, through the server 102, the electronic device 100 to update the state of the notification message. In some embodiments, after the electronic device 200 sends the deletion notification/read notification to the server 102, the server 102 may forward the deletion notification/read notification to the electronic device 100, and does not make any change to the deletion notification/read notification. In other words, the electronic device 200 sends the deletion notification/read notification to the electronic device 100 through the server 102. Then, the electronic device 100 may update the state of the notification message based on the deletion notification/read notification. In some other embodiments, the electronic device 200 may alternatively directly send the deletion notification/read notification to the electronic device 100 without forwarding the deletion notification/read notification through the server 102.

According to the message sharing method shown in FIG. 6A and FIG. 6B, when the user has a plurality of electronic devices, even if the user installs an application on only one of the electronic devices, when the electronic device receives a new notification message in the application, the user may also view, through another electronic device, the notification message that is of the application and that is received by the electronic device, to avoid a risk that the user misses an important message. In addition, the user may simultaneously perform, on one electronic device, an operation like viewing or deleting on notification messages received by a plurality of other electronic devices. After the operation, states (for example, a read state or a deleted state) of the notification messages may be further synchronized to the other electronic devices, and the plurality of electronic devices do not need to be operated in sequence. This simplifies the operation, is convenient and fast, and saves time. In addition, as a landmark feature of some operating systems (for example, a Harmony operating system), a sharing feature helps to form a difference and uniqueness with another ecosystem, and can improve usability and practicability, and improve user experience.

Scenario 2 (one or more same applications are installed on all electronic devices of the user):
The following describes a specific execution process of the message sharing method in the foregoing scenario 2 according to this embodiment of this application.

FIG. 7A and FIG. 7B show an example of a specific process of the message sharing method in the scenario 2 according to an embodiment of this application.

As shown in FIG. 7A and FIG. 7B, the method may be applied to a communication system including an electronic device 100, an electronic device 200, a server 101 (an application server), and a server 102 (a message sharing server). The electronic device 100 and the electronic device 200 may log in to a same account (for example, a Huawei account). A same application (for example, a "Browser" application or a "message" application) is installed on both the electronic device 100 and the electronic device 200. The server 101 may be a server of the application. The following describes specific steps of the method in detail.

S701 to S703: The server 101 sends a notification message 1' to the electronic device 200, the electronic device 200 generates data 1' based on the notification message 1', and the electronic device 200 displays the notification message 1'.

Specifically, the server 101 (the application server) may be a server of an application installed on the electronic device 100 and the electronic device 200. In this case, when the application needs to send a new notification message to the electronic device 200, the server 101 may send the notification message of the application to the electronic device 200. After receiving the notification message sent by the server 101, the electronic device 200 may display the notification message.

The foregoing "Browser" application is also used as an example. The server 101 may be a server of the "Browser" application. When the "Browser" application needs to send a new notification message to the electronic device 200, if the new notification message is the notification message 1', the server 101 may send the notification message 1' to the electronic device 200. After receiving the notification message 1', the electronic device 200 may display the notification message 1' (for example, display the notification message 1' in a notification bar or in a user interface of the "Browser" application).

In this embodiment of this application, to help the user view a cross-device notification message, after receiving the notification message 1', the electronic device 200 may encapsulate the notification message 1' to generate the data 1', so that the data 1' may be subsequently uploaded to the server 102 (the message sharing server). The server 102 sends the notification message 1' to another electronic device, so that the user can also view the notification message 1' on the another electronic device.

A format of the data 1' may be a JSON format. This is not limited thereto, and may alternatively be another format. This is not limited in this embodiment of this application. For related content of the data in the JSON format, refer to related text descriptions in FIG. 6A and FIG. 6B. Details are not described herein again.

For example, the notification message 1' is news that is of the "Browser" application and whose content is "XX" sent by Headline news. If a package name of the "Browser" application is com.xx.browser, the data 1' in the JSON format may be {{com.xx.chat}, {Headline news}, {XX}}.

In some embodiments, the data 1' may further include unique identification information of the notification message 1', for example, ID information of the notification message 1'. In this way, after subsequently performing an operation like deletion or read on the notification message 1', the user may indicate, through the server 102 based on the ID information of the notification message 1', the electronic device 200 to change a state of the notification message 1'.

In some embodiments, the data 1' may further include device information of the electronic device 200, for example, a device name and a device type, so that another electronic device can learn of a specific electronic device on which the notification message 1' is located.

It should be noted that a time sequence of performing step S702 and step S703 is not limited in this embodiment of this application. For example, step S702 may be performed before, after, and simultaneously with step S703.

S704: The electronic device 200 determines whether a plurality of devices log in to an account 1 and message sharing is set. If the plurality of devices log in to the account 1 and message sharing is set, the electronic device 200 performs the following step S705.

If the login account (for example, a Huawei account) of the electronic device 200 is the account 1, and the notification message 1' is a notification message of the "Browser" application, after the electronic device 200 receives the notification message 1' sent by the server 101, the electronic device 200 may determine whether a plurality of devices (that is, another electronic device other than the electronic device 200, for example, the electronic device 100) log in to the account 1, and determine whether message sharing is set on the electronic device 200 (for example, a message sharing function of the "Browser" application is enabled). If the plurality of devices log in to the account 1 and message sharing is set on the electronic device 200, for example, if the electronic device 200 determines that the electronic device 100 also logs in to the account 1, and the electronic device 200 enables the message sharing function of the "Browser" application, the electronic device 200 may perform the following step S705. If the plurality of devices log in to the account 1 and message sharing is set on the electronic device 200, the electronic device 200 does not perform a subsequent step.

In some embodiments, the electronic device 200 may alternatively perform step S702 after determining "Yes" in step S704, and perform the following step S705 after performing S702.

S705 to S707: The electronic device 200 sends the data 1' to the server 102, the server 102 stores the data 1', and the server 102 sends the data 1' to the electronic device 100.

After receiving the data 1' sent by the electronic device 200, the server 102 may first determine specific electronic devices log in to the same account (for example, the account 1) as the electronic device 200. After the determining is completed, the server 102 may send the data 1' to all the electronic devices that log in to the same account as the electronic device 200. All the electronic devices that log in to the same account as the electronic device 200 may include the electronic device 100.

There may be a plurality of implementations in which the server 102 determines specific electronic devices that log in to the same account as the electronic device 200. For example, the server 102 may store, in advance, device information of all the electronic devices that log in to the account 1, or obtain device information of all the electronic devices that log in to the account 1 from another server (for example, a server configured to perform account management), and determine, based on the device information, the other electronic devices that log in to the same account as the electronic device 200. For another example, the electronic device 200 may alternatively send, to the server 102, device information of the other electronic devices that log in to the same account as the electronic device 200, and the server 102 sends the data 1' to a corresponding device based on the device information.

S708 and S709: The electronic device 100 detects an operation performed by the user on an icon of an application of the notification message 1', and in response to the operation, the electronic device 100 displays a notification message list 1', where the notification message list includes the notification message 1'.

Specifically, after receiving the data 1' sent by the server 102, the electronic device 100 may parse the data 1, and then may determine that the application corresponding to the notification message 1' is also installed on the electronic device 100. In this embodiment of this application, to prompt the user that the application has a new notification message, a related identifier may be added to the icon of the application, for example, a horizontal line is added at a bottom of the icon of the application.

For example, the application of the notification message 1' is the "Browser" application. If the user wants to view a new notification message in the "Browser" application, the electronic device 100 may detect an operation (for example, the upward sliding operation shown in FIG. 4A) performed by the user on the icon of the "Browser" application. Then, the electronic device 100 may display the notification message list 1' (for example, the notification message list 430 shown in FIG. 4C). The notification message list may include the notification message 1' (for example, "Headline news 1" or "Headline news 2" shown in FIG. 4C).

For example, the option 431 or the option 432 shown in FIG. 4C may be generated and displayed by the electronic device 100 based on the data 1'.

In some embodiments, the server 102 may not actively send the data 1' to the electronic device 100 first, but may first send an indication message to the electronic device 100, to indicate that an application has a new notification message. After step S708 is performed, the electronic device 100 may then actively obtain data of the notification message of the application from the server 102, and display the notification message list based on the data.

S710 and S711: The electronic device 100 detects a deletion operation performed by the user on the notification message 1', and in response to the operation, the electronic device 100 cancels display of the notification message 1'.

Specifically, after the electronic device 100 displays the notification message list 1', if the user wants to delete the notification message 1', the electronic device 100 may detect a deletion operation (for example, the rightward sliding operation shown in FIG. 4I) performed by the user on the notification message 1', and in response to the operation, the electronic device 200 may cancel display of the notification message 1'.

For example, before the user deletes the notification message 1', it is assumed that the notification message list 1' includes the four notification messages (for example, "Headline news 1", "Headline news 2", "Headline news 3", and "Headline news 4") shown in FIG. 4I, and the notification message 1 is "Headline news 1". After the user deletes the notification message 1', the electronic device 100 may cancel display of the notification message 1' in the notification message list, and display only the remaining three notification messages.

S712 to S715: The electronic device 100 sends a deletion notification of the notification message 1' to the server 102, and the server 102 deletes the data 1'. Then, the server 102 sends an update notification to the electronic device 200, where the notification indicates the electronic device 200 to update the state of the notification message 1', and the electronic device 200 updates the state of the notification message 1'.

Specifically, after the electronic device 100 detects the deletion operation performed by the user on the notification message 1', the electronic device 100 may send a deletion notification of the notification message 1' to the server 102, the deletion notification may include the ID information of the notification message 1' and indication information of deleting the notification message 1' (for example, state information of deleting the notification message 1'). After receiving the deletion notification, the server 102 may find the stored data 1' based on the ID information of the notification message 1', and delete the data 1'. Then, the server 102 may further send an update notification to the electronic device 200. The notification indicates the electronic device 200 to update the state of the notification message 1'. After receiving the update notification sent by the server 102, the electronic device 200 may update the state of the notification message 1', that is, update the state of the notification message 1' to a "deleted" state.

For example, before the user deletes the notification message 1', it is assumed that the notification bar of the electronic device 200 includes four notification messages (for example, "Headline news 1", "Headline news 2", "Headline news 3", and "Headline news 4"), and the notification message 1' is "Headline news 1". After the user deletes the notification message 1', the electronic device 200 may cancel display of the notification message 1' in the notification bar, and display only the remaining three notification messages.

In this embodiment of this application, in addition to performing the deletion operation on the notification message 1', the user may further perform a read operation on the notification message 1' (that is, an operation of viewing specific content of the notification message 1'). This is similar to step S712 to step S715. After the electronic device 100 detects the read operation performed by the user on the notification message 1', the electronic device 100 may send a read notification of the notification message 1' to the server 102, where the read notification may include the ID information of the notification message 1' and indication information that the notification message 1' is read (for example, state information that the notification message 1' is read). After receiving the read notification, the server 102 may find the stored data 1' based on the ID information of the notification message 1', and may update the state of the notification message 1' to the "read" state in the data 1' (or may delete the data 1'). Then, the server 102 may further send an update notification to the electronic device 200. The notification indicates the electronic device 200 to update the state of the notification message 1'. After receiving the update notification sent by the server 102, the electronic device 200 may update the state of the notification message 1', that is, update the state of the notification message 1' to the "read" state.

For example, it is assumed that the application corresponding to the notification message 1' is the "Messages" application, and the notification message 1' is the notification message sent by Lily shown in FIG. 5D. Before the user reads the notification message 1', the electronic device 200 may display a number badge on the icon of the "Messages" application shown in FIG. 5A. In this case, after the user reads the notification message 1', the electronic device 200 may cancel display of the number badge on the icon of the "Messages" application shown in FIG. 5F.

Step S712 to step S714 are a possible implementation in which the electronic device 100 indicates, through the server 102, the electronic device 200 to update the state of the notification message. In some embodiments, after the electronic device 100 sends the deletion notification/read notification to the server 102, the server 102 may forward the deletion notification/read notification to the electronic device 200, and does not make any change to the deletion notification/read notification. In other words, the electronic device 100 sends the deletion notification/read notification to the electronic device 200 through the server 102. Then, the electronic device 200 may update the state of the notification message based on the deletion notification/read notification. In some other embodiments, the electronic device 100 may alternatively directly send the deletion notification/read notification to the electronic device 200 without forwarding the deletion notification/read notification through the server 102.

According to the message sharing method shown in FIG. 7A and FIG. 7B, when the user has a plurality of electronic devices, and one or more same applications are installed on the plurality of electronic devices, when one of the electronic devices receives a new notification message in the application, the user may also view, through another electronic device, the notification message that is of the application and that is received by the electronic device, to avoid a risk that the user misses an important message. In addition, the user may simultaneously perform, on one electronic device, an operation like viewing or deleting on notification messages received by a plurality of other electronic devices. After the operation, states (for example, a read state or a deleted state) of the notification messages may be further synchronized to the other electronic devices, and the plurality of electronic devices do not need to be operated in sequence. This simplifies the operation, is convenient and fast, and saves time. In addition, as a landmark feature of some operating systems (for example, a Harmony operating system), a sharing feature helps to form a difference and uniqueness with another ecosystem, and can improve usability and practicability, and improve user experience.

The following describes a diagram of a possible collaboration manner between internal modules of the electronic device 100 when an FA widget is operated according to an embodiment of this application.

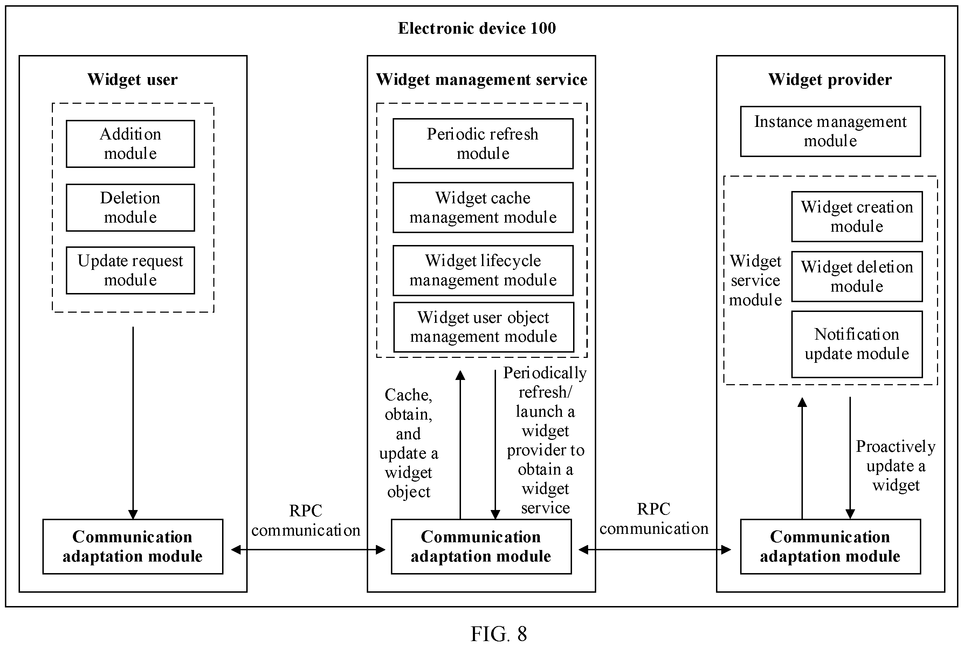

FIG. 8 shows an example of a possible collaboration manner between internal modules of an electronic device 100 when an FA widget is operated according to an embodiment of this application.

The electronic device 100 may include a widget user, a widget management service, and a widget provider.

The widget user may be a host application (for example, a "Desktop" application) that displays widget content, and controls a display location of the widget in the host application.

The widget management service may be a service module provided by a system, and may be configured to manage a resident proxy service of an added widget in a system, including management and use of a widget object, periodic widget refreshing, and the like.

The widget provider may be an application or an atomic service that provides widget display content, and may be configured to control display content, a control layout, a control tap event, and the like of the widget.

The widget user may include an adding module, a deletion module, an update request module, and a communication adaptation module.

The adding module may be configured to add a widget.

The deletion module may be configured to delete a widget.

The update request module may be configured to request to update a widget.

The communication adaptation module may be configured to exchange information with the widget management service through remote procedure call (Remote Procedure Call, RPC) communication.

The widget management service may include a periodic refresh module, a widget cache management module, a widget lifecycle management module, a widget user object management module, and a communication adaptation module.

The periodic refresh module may be configured to: after a widget is added, start a scheduled task according to a widget refresh strategy to periodically trigger widget refresh.

The widget cache management module may be configured to cache view (View) information of a widget after the widget is added to the widget management service, so that cached data can be directly returned when the widget is obtained next time, thereby reducing a delay.

The widget lifecycle management module may be configured to suspend refreshing of a widget when the widget is switched to the background or is blocked, and may be further configured to update and clear widget data when the widget is upgraded or uninstalled.

The widget user object management module may be configured to manage an RPC object of the widget user, for example, may be configured to perform verification on a request of the widget user and perform callback processing after the widget is updated.

The communication adaptation module may be configured to exchange information with the widget provider and the widget user through RPC communication.

The widget provider may include an instance management module (which may also be referred to as a widget provider instance management module), a widget service module, and a communication adaptation module.

The instance management module may be configured to perform persistence management on a widget instance allocated by the widget management service.

The widget service module may be configured to provide a corresponding widget service, for example, create a widget, delete a widget, or update a widget, based on a request of create creation (OnCreateForm), create deletion (OnDeleteForm), create update (OnUpdateForm), or the like.

The communication adaptation module may be configured to exchange information with the widget management service through RPC communication, for example, actively push updated data of a widget to the widget management service; and may be further configured to receive a notification message (for example, a push message or a chat message) received by a message receiver (not shown in the figure) on the electronic device 100. The widget service module constructs a view object of the notification message, and then sends the view object to the widget management service, to cache, obtain, and update the widget object. In this way, the electronic device 100 may subsequently display the notification message in a form of a widget.

The following describes, with reference to FIG. 8, a possible implementation in which the electronic device 100 "displays" the notification message.

In this embodiment of this application, the notification message list may be displayed in a form of a widget. After the user triggers display of a notification message list of an application (for example, sliding upward an icon of an application), the adding module of the widget user may send a "widget addition" request to the widget management service through RPC communication. Then, the widget management service may invoke, through RPC communication, a widget creation interface (for example, OnCreateForm) provided by the widget provider; construct, with reference to data of a notification message that is of the widget provider and that is received by the electronic device 100, a view (View) object corresponding to the notification message; transfer the view object to a display module (not shown in the figure) of the electronic device 100; and display the view object in a form of a widget through the display module.

With reference to FIG. 8, the following describes a possible implementation in which the electronic device 100 "deletes" the notification message.

In this embodiment of this application, after the electronic device 100 displays a notification message list of an application in a form of a widget, and after the user triggers deletion of a notification message (for example, a notification message that is slid rightward or slid leftward) in the notification message list, the widget user may simultaneously send, to the widget management service, a "widget deletion" request (that is, deleting the notification message) and ID information of the notification message. Then, the widget management service may invoke, through RPC communication, a widget deletion interface (for example, OnDeleteForm) provided by the widget provider, to delete the notification message, and may indicate the server 102 (the message sharing server) to delete stored data corresponding to the notification message. The widget provider may also create a new view object, and indicate the display module of the electronic device 100 to refresh and display the notification message list.

With reference to FIG. 8, the following describes a possible implementation in which the electronic device 100 "updates" the notification message.

In this embodiment of this application, after the electronic device 100 displays a notification message list of an application in a form of a widget, and after the user triggers update of a notification message in the notification message list (for example, double-taps an area in which a title of the notification message list is located), the widget user may send a "widget update" request to the widget service manager. Then, the widget management service may invoke, through RPC communication, a widget update interface (for example, OnUpdateForm) provided by the widget provider, to obtain a latest notification message list, generate a new view object, and indicate a display module of the electronic device 100 to refresh and display the notification message list.

The foregoing uses only the electronic device 100 as an example to describe a possible collaboration manner between internal modules when the FA widget is operated. Other electronic devices (for example, the electronic device 200 and the electronic device 300) are similar to the electronic device 100. Details are not described herein again.

It should be understood that the structure of the electronic device 100 shown in FIG. 8 is merely an example, and the electronic device 100 may have more or fewer components than those shown in FIG. 8, may combine two or more components, or may have different component configurations. This is not limited in embodiments of this application.

The following describes a software structure of an electronic device 100 according to an embodiment of this application.

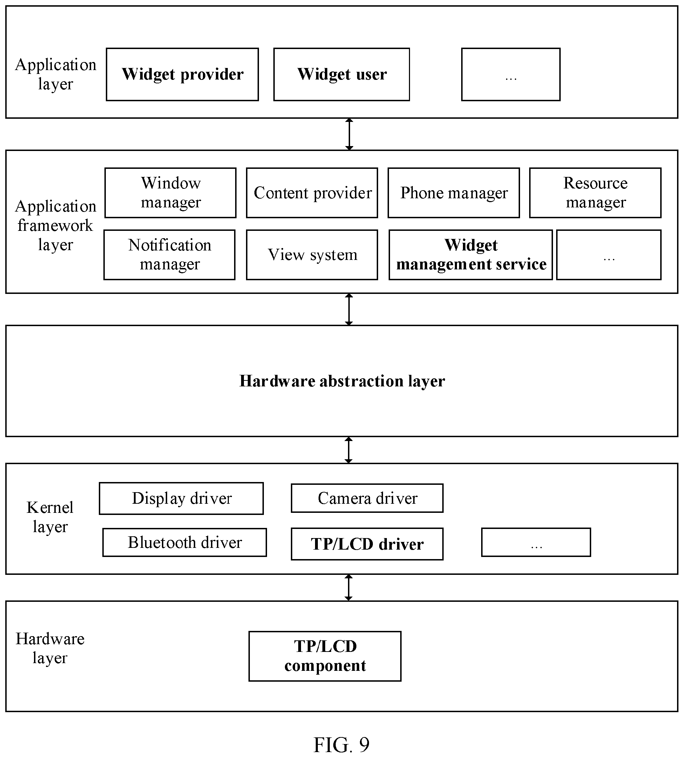

FIG. 9 shows an example of a software structure of an electronic device 100 according to an embodiment of this application.

As shown in FIG. 9, a software system of the electronic device 100 may use a layered architecture, an event-driven architecture, a microkernel architecture, a micro service architecture, or a cloud architecture. In this embodiment of this application, an Android system of the layered architecture is used as an example to describe a software structure of the electronic device 100.

In a layered architecture, software is divided into several layers, and each layer has a clear role and task. The layers communicate with each other through a software interface. In some embodiments, the Android system is divided into five layers: an application layer, an application framework layer, a hardware abstraction layer, a kernel layer, and a hardware layer from top to bottom.

The application layer may include a series of application packages.

As shown in FIG. 9, the application package may include one or more applications, for example, a widget provider and a widget user.

The widget provider may be an application (for example, an application like Browser, Chat, Messages, Camera, Gallery, Calendar, Map, WLAN, Bluetooth, or Music) that provides widget display content.

The widget user may be a host application (for example, a "Desktop" application) that displays widget content.

The application framework layer provides an application programming interface (application programming interface, API) and a programming framework for an application at the application layer. The application framework layer includes some predefined functions.

As shown in FIG. 9, the application framework layer may include a window manager, a content provider, a view system, a phone manager, a resource manager, a notification manager, a widget management service, and the like.

The widget management service may be a service module provided by a system, and may be configured to manage a resident proxy service of an added widget in a system, including management and use of a widget object, periodic widget refreshing, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function for the electronic device 100, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an announcement is given, the electronic device vibrates, or the indicator light blinks.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The kernel layer is a layer between hardware and software. The kernel layer includes at least a display driver, a camera driver, a Bluetooth driver, and a TP/LCD driver (that is, a driver of a touch panel/display panel).

The hardware abstraction layer (Hardware Abstraction Layer, HAL) may be configured to send a message (for example, an input event) received from the kernel layer to the application framework layer.

The hardware layer may include one or more hardware components, for example, a TP/LCD component.

In this embodiment of this application, the TP/LCD component may receive a touch operation (for example, an operation of sliding upward an icon of an application, an operation of sliding leftward/rightward a notification message, or an operation of double-tapping an area in which a title of a notification message list is located) of the user, and then trigger an interrupt event, to indicate the TP/LCD driver at the kernel layer to obtain data of the touch operation. After receiving the interrupt event, the TP/LCD driver at the kernel layer may obtain the data of the touch operation, convert the data into an input event, and report the input event to the application framework layer through the hardware abstraction layer. The application framework layer may identify a control corresponding to the input event, to further implement a function (for example, displaying a notification message list, deleting a notification message in the notification message list, or updating a notification message in the notification list) to be triggered by the touch operation.

A software structure of the electronic device 200 or the electronic device 300 may be the same as or similar to the software structure of the electronic device 100. For related content of the software structure of the electronic device 200 or the electronic device 300, refer to related text descriptions of the software structure of the electronic device 100 shown in FIG. 9. Details are not described herein again.

The following describes an example of a working process of software and hardware of the electronic device 100 with reference to a photographing scenario.

When the touch sensor 180K receives a touch operation, a corresponding hardware interrupt is sent to the kernel layer. The kernel layer processes the touch operation into an original input event (including information, for example, touch coordinates and a time stamp of the touch operation). The original input event is stored at the kernel layer. The application framework layer obtains the original input event from the kernel layer, and identifies a control corresponding to the input event. An example in which the touch operation is a touch single-tap operation, and a control corresponding to the touch single-tap operation is a control of a camera application icon is used. The camera application invokes an interface of the application framework layer to enable the camera application, then enables the camera driver by invoking the kernel layer, and captures a static image or a video through the camera 193.

It should be understood that the software structure of the electronic device 100 shown in FIG. 9 is merely an example, and the electronic device 100 may have more or fewer components than those shown in FIG. 9, may combine two or more components, or may have different component configurations. This is not limited in embodiments of this application.

The following describes a schematic flowchart of a message push method according to an embodiment of this application.

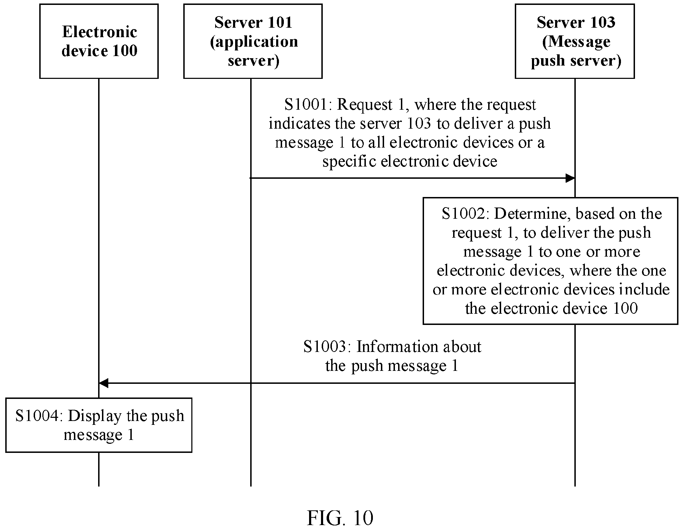

FIG. 10 shows an example of a process of a message push method according to an embodiment of this application.

As shown in FIG. 10, the method may be applied to a communication system including an electronic device 100, a server 101 (an application server), and a server 103 (a message push server). The server 101 may be a server of an application, and the server 103 may be a server that is provided by a third-party push provider and that is configured to push a message. The following describes in detail specific steps of the method.

S1001: The server 101 sends a request 1 to the server 103, where the request indicates the server 103 to deliver a push message 1 to all electronic devices or a specific electronic device.

Specifically, when an application needs to send a new push message to the electronic device, for example, the push message 1, a developer may invoke a message push interface (Push Application Interface, Push API) of the server 103 (the message push server) through the server 101 (the application server) to send a request 1 to the server 103, where the request indicates the server 103 to deliver the push message 1 to all electronic devices or a specific electronic device.

The request 1 may include device information of all electronic devices or a specific electronic device (for example, ID information of the electronic device), information about an application of the push message 1 (for example, a package name of the application), and information about the push message 1 (for example, content of the push message 1). In this way, the server 103 may determine a specific push message that needs to be delivered to a specific application on a specific electronic device/specific electronic devices.

In some embodiments, the server 101 and the server 103 may be integrated into one server.

S1002 and S1003: The server 103 determines, based on the request 1, to deliver the push message 1 to one or more electronic devices, where the one or more electronic devices include the electronic device 100. Then, the server 103 delivers the information about the push message 1 to the electronic device 100.

Specifically, after receiving the request 1 sent by the server 101, the server 103 may determine, based on the device information of the electronic device that is included in the request 1, a specific electronic device/specific electronic devices to which the push message is delivered, for example, determine to deliver the push message to the electronic device 100. The server 103 may send the information about the push message 1 to the electronic device 100.

A possible implementation in which the server 103 sends the information about the push message 1 to the electronic device 100 is as follows: The server 103 may first send the information about the push message 1 to the message push interface provided by a vendor of the electronic device 100, and then deliver the information about the push message 1 to a message receiver of the electronic device 100 through the message push interface, so that the electronic device 100 may receive the information about the push message 1.

In some embodiments, when delivering the information about the push message 1 to the corresponding electronic device, the server 103 may further deliver the information about the application (for example, the package name of the application) of the push message 1 to the corresponding electronic device, so that the electronic device can learn of the specific application that generates the push message 1.

In some embodiments, the information about the push message 1 may include the information (for example, the package name of the application) about the application that the push message 1.

In some embodiments, after determining a specific electronic device/specific electronic devices to which the information about the push message 1 is delivered, the server 103 may alternatively directly forward the request 1 to the corresponding electronic device.

S1004: The electronic device 100 displays the push message 1.

Specifically, after the electronic device 100 receives the information about the push message 1 that is sent by the server 103, the electronic device 100 may display the push message 1.

For example, the push message 1 is displayed in a form of a widget. With reference to the structures of the electronic device 100 shown in FIG. 8 and FIG. 9, the following describes a possible implementation in which the electronic device 100 displays the push message 1.

After the message receiver of the electronic device 100 receives the information about the push message 1, the widget provider (that is, the application that the push message 1) may receive the information about the push message 1 through the communication adaptation module. Then, the widget provider may create a view object of the push message 1 based on the information about the push message 1, and after the creation is completed, may send the view object of the push message 1 to the widget management service, to cache, obtain, and update the widget object. Then, after the electronic device 100 detects an operation of triggering display of the push message 1 by the user (for example, an operation of sliding upward an icon of the application of the push message 1), the widget user (for example, a "Desktop" application) may obtain the created view object of the push message 1 from the widget management service. Then, the electronic device 100 may display the push message 1 in a form of a widget in a user interface provided by the widget user.

The following describes a diagram of a structure of an electronic device 100 according to an embodiment of this application.

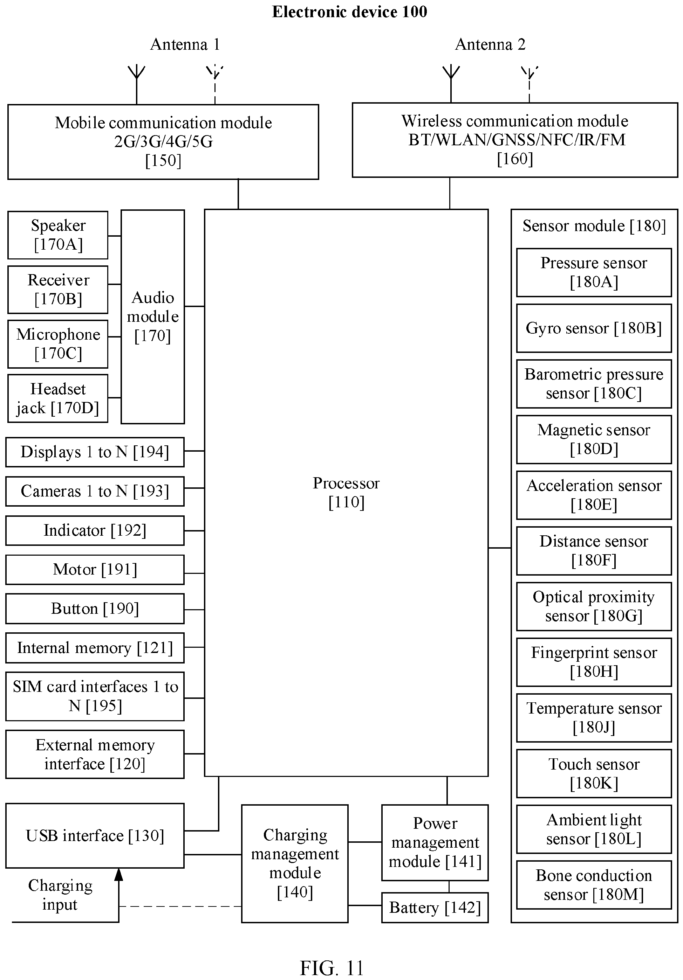

FIG. 11 shows an example structure of an electronic device 100 according to an embodiment of this application.

As shown in FIG. 11, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data that have/has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, including a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used to perform audio communication, and sample, quantize, and code an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component, for example, the display 194 or the camera 193. The MIPI interface includes a camera serial interface (camera serial interface, CSI), a display serial interface (display serial interface, DSI), and the like. In some embodiments, the processor 110 communicates with the camera 193 via the CSI, to implement a photographing function of the electronic device 100. The processor 110 communicates with the display 194 via the DSI interface, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device, or may be configured to connect to a headset for playing audio through the headset. The interface may alternatively be configured to be connected to another terminal device, for example, an AR device.

It can be understood that an interface connection relationship between modules illustrated in this embodiment of this application is merely an illustrative description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. When charging the battery 142, the charging management module 140 may further supply power to the electronic device 100 by using the power management module 141.

The power management module 141 is configured to connect to the battery 142, the charging management module 140, and the processor 110. The power management module 141 receives input of the battery 142 and/or the charging management module 140, to supply power to the processor 110, the internal memory 121, an external memory, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a solution of wireless communication that is applied to the electronic device 100 and that includes a 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video by the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 100, and that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave by the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The electronic device 100 may implement a photographing function through the camera 193, the ISP, the video codec, the GPU, the display 194, the application processor and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness and the like of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 may play back or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a transmission mode between human brain neurons, and may further continuously perform self-learning. Applications such as intelligent cognition of the electronic device 100 may be implemented through the NPU, for example, image recognition, facial recognition, speech recognition, and text understanding.

The external memory interface 120 may be used to connect to an external storage card, for example, a micro SD card, to extend a storage capability of the electronic device 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a voice playing function or an image playing function), and the like. The data storage area may store data (such as audio data and an address book) created during use of the electronic device 100, and the like. In addition, the internal memory 121 may include a highspeed random access memory, or may include a nonvolatile memory, for example, at least one magnetic disk storage device, a flash memory, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to code and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an electrical audio signal into a sound signal. When a call is answered or speech information is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function and the like.

The headset jack 170D is configured to connect to a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch location based on a detection signal of the pressure sensor 180A. In some embodiments, touch operations that are performed in a same touch position but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating a new SMS message is performed.

The gyro sensor 180B may be configured to determine a moving posture of the electronic device 100. **In** some embodiments, an angular velocity of the electronic device 100 around three axes (namely, axes x, y, and z) may be determined through the gyro sensor 180B. The gyro sensor 180B may be configured to implement image stabilization during photographing. For example, when the shutter is pressed, the gyro sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyro sensor 180B may also be used in a navigation scenario and a somatic game scenario.

The barometric pressure sensor 180C is configured to measure barometric pressure. **In** some embodiments, the electronic device 100 calculates an altitude through the barometric pressure measured by the barometric pressure sensor 180C, to assist in positioning and navigation.

The magnetic sensor 180D includes a Hall sensor. The electronic device 100 may detect opening and closing of a flip cover by using the magnetic sensor 180D. **In** some embodiments, when the electronic device 100 is a clamshell phone, the electronic device 100 may detect opening and closing of a flip cover based on the magnetic sensor 180D. Further, a feature such as automatic unlocking of the flip cover is set based on a detected opening or closing state of the leather case or a detected opening or closing state of the flip cover.

The acceleration sensor 180E may detect accelerations in various directions (usually on three axes) of the electronic device 100. When the electronic device 100 is still, a magnitude and a direction of gravity may be detected. The acceleration sensor may be further configured to identify a posture of the electronic device 100, and is used in an application such as switching between landscape mode and portrait mode or a pedometer.

The distance sensor 180F is configured to measure a distance. The electronic device 100 may measure the distance in an infrared manner or a laser manner. In some embodiments, in a photographing scenario, the electronic device 100 may measure a distance through the distance sensor 180F to implement quick focusing.

The optical proximity sensor 180G may include, for example, a light emitting diode (LED) and an optical detector, for example, a photodiode. The light emitting diode may be an infrared light emitting diode. The electronic device 100 emits infrared light by using the light-emitting diode. The electronic device 100 detects infrared reflected light from a nearby object through the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be used in a smart cover mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy through the temperature detected by the temperature sensor 180J. For example, when the temperature reported by the temperature sensor 180J exceeds a threshold, the electronic device 100 lowers performance of a processor nearby the temperature sensor 180J, to reduce power consumption for thermal protection. In some other embodiments, when the temperature is less than another threshold, the electronic device 100 heats the battery 142 to prevent the electronic device 100 from being shut down abnormally due to a low temperature. In some other embodiments, when the temperature is lower than still another threshold, the electronic device 100 boosts an output voltage of the battery 142 to avoid abnormal shutdown caused by a low temperature.

The touch sensor 180K is also referred to as a "touch panel (Touch Panel, TP)". The touch sensor 180K may be disposed on the display 194, and a touchscreen, also referred to as a "touch screen", is formed by the touch sensor 180K and the display 194. The touch sensor 180K is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor 180K may also be disposed on a surface of the electronic device 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may also be disposed in the headset, to obtain a bone conduction headset. The audio module 170 may obtain a speech signal through parsing based on the vibration signal that is of the vibration bone of the vocal-cord part and that is obtained by the bone conduction sensor 180M, to implement a speech function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 is also compatible with an external storage card. The electronic device 100 interacts with a network through the SIM card, to implement functions such as conversation and data communication. In some embodiments, the electronic device 100 uses an eSIM, that is, an embedded SIM card. The eSIM card may be embedded into the electronic device 100, and cannot be separated from the electronic device 100.

It should be understood that the electronic device 100 shown in FIG. 11 is merely an example, and the electronic device 100 may have more or fewer components than those shown in FIG. 11, may combine two or more components, or may have different component configurations. The components shown in FIG. 11 may be implemented in hardware including one or more signal processing and/or application-specific integrated circuits, software, or a combination of hardware and software.

A structure of the electronic device 200 or the electronic device 300 may be the same as or similar to the structure of the electronic device 100. For related content of the structure of the electronic device 200 or the electronic device 300, refer to related text descriptions of the structure of the electronic device 100 shown in FIG. 11. Details are not described herein again.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

A person of ordinary skill in the art may understand that all or some of the processes of the methods in embodiments may be implemented by a computer program instructing related hardware. The program may be stored in a computer-readable storage medium. When the program runs, the processes of the methods in embodiments are performed. The foregoing storage medium includes any medium that can store program code, such as a ROM, a random access memory RAM, a magnetic disk, or an optical disc.

The foregoing embodiments are merely intended for describing the technical solutions of this application other than limiting this application. Although this application is described in detail with reference to the foregoing embodiments, a person of ordinary skill in the art should understand that modifications may still be made to the technical solutions described in the foregoing embodiments or equivalent replacements may still be made to some technical features thereof, without departing from the scope of the technical solutions of embodiments of this application.

## Claims

1. A message sharing method, applied to a first electronic device, wherein the method comprises:
displaying, by the first electronic device, a first virtual icon, wherein the first virtual icon is a virtual icon corresponding to a first application, the first application is installed on a second electronic device, and both the second electronic device and the first electronic device are associated with a first account;
detecting, by the first electronic device, a first operation performed by a user on the first virtual icon; and
displaying, by the first electronic device, a first notification message list in response to the first operation, wherein the first notification message list comprises one or more options, the one or more options comprise a first option, the first option is an option corresponding to a first notification message, and the first notification message is a notification message that is of the first application and that is received by the second electronic device.

2. The method according to claim 1, wherein the first virtual icon is generated based on an icon of the first application, and the first virtual icon indicates that the first application is not installed on the first electronic device.

3. The method according to claim 1 or 2, wherein after the displaying, by the first electronic device, a first notification message list, the method further comprises:
detecting, by the first electronic device, a second operation performed by the user on the first option;
displaying, by the first electronic device, first content in the first notification message list in response to the second operation, wherein the first content is message content of the first notification message; and
sending, by the first electronic device, a first indication message to the second electronic device, wherein the first indication message indicates the second electronic device to update a state of the first notification message to a "read" state.

4. The method according to claim 1 or 2, wherein after the displaying, by the first electronic device, a first notification message list, the method further comprises:
detecting, by the first electronic device, a third operation performed by the user on the first option;
in response to the third operation, canceling, by the first electronic device, display of the first option in the first notification message list; and
sending, by the first electronic device, a second indication message to the second electronic device, wherein the second indication message indicates the second electronic device to update a state of the first notification message to a "deleted" state.

5. The method according to claim 1 or 2, wherein after the displaying, by the first electronic device, a first notification message list, the method further comprises:
detecting, by the first electronic device, a fourth operation performed by the user on the first notification message list; and
refreshing and displaying, by the first electronic device, the first notification message list in response to the fourth operation, wherein one or more options comprised in the first notification message list displayed after the refreshing are completely the same as, partially the same as, or completely different from the one or more options comprised in the first notification message list displayed before the refreshing.

6. The method according to any one of claims 1 to 5, wherein the one or more options further comprise a second option, and after the displaying, by the first electronic device, a first notification message list, the method further comprises:
detecting, by the first electronic device, a fifth operation performed by the user on the first notification message list; and
displaying, by the first electronic device, the second option in the first notification message list in response to the fifth operation, wherein the second option is an option corresponding to a second notification message, and the second notification message is a notification message that is of the first application and that is received by the second electronic device.

7. The method according to any one of claims 1 to 5, wherein before the displaying, by the first electronic device, a first virtual icon, the method further comprises:
receiving, by the first electronic device, first data sent by a first server, wherein
the first data is generated by the second electronic device based on the first notification message and sent to the first server, and the first data is used by the first electronic device to display the first virtual icon and the first notification message list based on the first data.

8. The method according to any one of claims 1 to 7, wherein the first electronic device displays the first virtual icon after the following conditions are met:
the second electronic device detects an operation of enabling a message sharing function for the first application by the user; and
in response to the operation, the second electronic device allows the first application to share a message with one or more electronic devices, wherein the one or more electronic devices comprise the first electronic device.

9. The method according to any one of claims 1 to 8, wherein the first notification message list is displayed on the first electronic device in a form of a feature ability FA widget.

10. A message sharing method, applied to a first electronic device, wherein the method comprises:
displaying, by the first electronic device, a first user interface, wherein the first user interface comprises icons of one or more applications, the icons of the one or more applications comprise an icon of a first application, the first application is installed on the first electronic device and a second electronic device, and both the second electronic device and the first electronic device are associated with a first account;
detecting, by the first electronic device, a first operation performed by a user on the icon of the first application; and
displaying, by the first electronic device, a first notification message list in response to the first operation, wherein the first notification message list comprises one or more options, the one or more options comprise a first option, the first option is an option corresponding to a first notification message, and the first notification message is a notification message that is of the first application and that is received by the second electronic device.

11. The method according to claim 10, wherein after the displaying, by the first electronic device, a first notification message list, the method further comprises:
detecting, by the first electronic device, a second operation performed by the user on the first option;
displaying, by the first electronic device, first content in the first notification message list in response to the second operation, wherein the first content is message content of the first notification message; and
sending, by the first electronic device, a first indication message to the second electronic device, wherein the first indication message indicates the second electronic device to update a state of the first notification message to a "read" state.

12. The method according to claim 10, wherein after the displaying, by the first electronic device, a first notification message list, the method further comprises:
detecting, by the first electronic device, a third operation performed by the user on the first option;
in response to the third operation, canceling, by the first electronic device, display of the first option in the first notification message list; and
sending, by the first electronic device, a second indication message to the second electronic device, wherein the second indication message indicates the second electronic device to update a state of the first notification message to a "deleted" state.

13. The method according to claim 10, wherein after the displaying, by the first electronic device, a first notification message list, the method further comprises:
detecting, by the first electronic device, a fourth operation performed by the user on the first notification message list; and
refreshing and displaying, by the first electronic device, the first notification message list in response to the fourth operation, wherein one or more options comprised in the first notification message list displayed after the refreshing are completely the same as, partially the same as, or completely different from the one or more options comprised in the first notification message list displayed before the refreshing.

14. The method according to any one of claims 10 to 13, wherein the one or more options further comprise a second option, and after the displaying, by the first electronic device, a first notification message list, the method further comprises:
detecting, by the first electronic device, a fifth operation performed by the user on the first notification message list; and
displaying, by the first electronic device, the second option in the first notification message list in response to the fifth operation, wherein the second option is an option corresponding to a second notification message, and the second notification message is a notification message that is of the first application and that is received by the second electronic device.

15. The method according to claim 10, wherein after the displaying, by the first electronic device, a first notification message list, the method further comprises:
detecting, by the first electronic device, a sixth operation performed by the user on the first option;
displaying, by the first electronic device, a second user interface in response to the sixth operation, wherein the second user interface is a user interface of the first application, the second user interface comprises second content, and the second content is message content of the first notification message; and
sending, by the first electronic device, a third indication message to the second electronic device, wherein the third indication message indicates the second electronic device to update a state of the first notification message to a "read" state.

16. The method according to any one of claims 10 to 15, wherein the icons of the one or more applications comprised in the first user interface each are an icon of an application having an unread notification message, and before the displaying, by the first electronic device, a first user interface, the method further comprises:
displaying, by the first electronic device, a third user interface, wherein the third user interface comprises the icon of the first application;
detecting, by the first electronic device, a seventh operation performed by the user on the icon of the first application; and
displaying, by the first electronic device, the first user interface in response to the seventh operation.

17. The method according to any one of claims 10 to 16, wherein before the displaying, by the first electronic device, a first user interface, the method further comprises:
receiving, by the first electronic device, first data sent by a first server, wherein
the first data is generated by the second electronic device based on the first notification message and sent to the first server, and the first data is used by the first electronic device to display the first notification message list based on the first data.

18. The method according to any one of claims 10 to 17, wherein the first electronic device displays the first user interface after the following conditions are met:
the second electronic device detects an operation of enabling a message sharing function for the first application by the user; and
in response to the operation, the second electronic device allows the first application to share a message with one or more electronic devices, wherein the one or more electronic devices comprise the first electronic device.

19. The method according to any one of claims 10 to 18, wherein the first notification message list further comprises an identifier of the second electronic device, and the identifier of the second electronic device indicates that the first notification message is received by the second electronic device.

20. The method according to any one of claims 10 to 19, wherein the first notification message list is displayed on the first electronic device in a form of a feature ability FA widget.

21. An electronic device, wherein the electronic device comprises one or more processors and one or more memories, wherein the one or more memories are coupled to the one or more processors, the one or more memories are configured to store computer program code, the computer program code comprises computer instructions, and when the one or more processors execute the computer instructions, the electronic device is enabled to perform the method according to any one of claims 1 to 9 or claims 10 to 20.

22. A computer storage medium, wherein the computer storage medium stores a computer program, the computer program comprises program instructions, and when the program instructions are run on an electronic device, the electronic device is enabled to perform the method according to any one of claims 1 to 9 or claims 10 to 20.
